# FASCICULE DE BREVET EUROPEEN

(11) **EP 1 733 185 B1**
(45) Date de publication et mention de la délivrance du brevet: **10.06.2009**
(21) Numéro de dépôt: 05729359.9
(22) Date de dépôt: 17.02.2005
(51) Int. Cl.: G01C 15/00

(54) **OUTIL POUR LE METRAGE DE SURFACES**
OBERFLÄCHEN-ZÄHLEINRICHTUNG
SURFACE METERING DEVICE

(30) Priorité: 19.02.2004 FR 0401661; 12.03.2004 FR 0402603
(43) Date de publication de la demande: 20.12.2006
(73) Titulaire: Measurix, 31570 Sainte Foy d'Aigrefeuille (FR)
(72) Inventeur: SCHIAVI, Jean-Pierre, F-31570 Sainte Foy D'Aigrefeuille (FR)
(74) Mandataire: Cabinet BARRE LAFORGUE & associés
(86) Numéro de dépôt international: PCT/FR2005/000365
(87) Numéro de publication internationale: WO 2005/090910

(56) Documents cités:
- DE-A1- 19 545 589
- FR-A1- 2 630 539
- US-A- 5 337 149
- PATENT ABSTRACTS OF JAPAN vol. 2003, no. 12, 5 décembre 2003 (2003-12-05) & JP 2003 329453 A (KYOKUTO SANKI CO LTD), 19 novembre 2003 (2003-11-19)

## Description

L'invention concerne un dispositif et un procédé de mesure de la superficie de surfaces planes polygonales dans l'espace. Elle s'applique plus particulièrement au domaine du bâtiment (architecture, construction...), et vise à offrir un outil pour le métrage de surfaces, et notamment pour le calcul de la superficie du sol, du plafond et des murs d'une pièce de bâtiment.

La méthode traditionnelle, utilisée pour mesurer et calculer la superficie des surfaces délimitant une pièce de bâtiment, consiste à :
- pour chaque surface plane rectangulaire, telle qu'un pan de mur, ou encore le sol ou le plafond de la pièce si celle-ci est rectangulaire, calculer la superficie de cette surface à partir d'une mesure de sa longueur et de sa largeur,
- pour chaque surface plane polygonale de géométrie plus complexe, définir une partition de cette surface en triangles (méthode de la triangulation) en "traçant" des diagonales reliant un sommet donné de la surface polygonale à chacun des autres sommets, et calculer la superficie de la surface à partir des mesures de chacune de ces diagonales et de chaque côté de la surface.

Les mesures (largeur, longueur, diagonale...) sont généralement effectuées au moyen d'un mètre ruban ou d'un télémètre puis notées par le métreur sur un croquis sur papier ; les calculs sont effectués en saisissant manuellement les cotes mesurées dans un outil de calcul tel qu'un tableur ou une calculatrice.

Cette méthode exige de nombreux déplacements de l'opérateur pour effectuer les mesures, une réflexion attentive pour déterminer les cotes à mesurer et les règles de calcul à appliquer, de nombreuses manipulations qui demandent une grande rigueur (notamment lors de la lecture sur le télémètre et du report sur le croquis des cotes mesurées, et lors de la saisie desdites cotes dans l'outil de calcul). Le risque d'erreur est important. Cette méthode suppose de plus qu'il n'y ait pas d'obstacle à la réalisation des mesures (mobilier...).

Certains dispositifs connus permettent d'effectuer des levés d'architecture (représentations graphiques d'une construction existante) de façon semi-automatique, lesquels levés d'architecture peuvent ensuite être utilisés pour calculer des superficies, à l'aide d'un tableur indépendant ou intégré au dispositif de levé. Les dispositifs de levé connus permettent de limiter d'une part les risques d'erreur (lesquels sont essentiellement limités au choix des points relevés au moyen du dispositif) et d'autre part les déplacements du métreur (les relevés s'effectuant à partir d'une -ou éventuellement plusieurs- station centrale).

DE 195 45 589 décrit un dispositif et un procédé permettant de réaliser de tels levés d'architecture, dans l'unique but de marquer, sur le bâtiment existant, des lignes, surfaces ou volumes indiquant la position future d'un élément de construction à installer tel qu'un plafond suspendu, une cloison de séparation... Le procédé de marquage de DE 195 45 589 consiste à :
- reconstituer un modèle mathématique "idéalisé" de "l'espace réel" observé, à partir des coordonnées sphériques de points de mesure relevés par un télémètre et des codeurs angulaires ; si l'espace réel observé est une surface plane, il convient de relever trois points de mesure sur cette surface, pour générer un plan dans le modèle mathématique ; pour délimiter le contour de cette surface, les surfaces adjacentes doivent également être relevées ; de même, si l'espace réel observé est un volume, il convient de relever trois points sur chacune des surfaces le délimitant,
- viser un point, dit point de repère, et corriger la visée (c'est-à-dire l'orientation du télémètre) de sorte que le point de repère corresponde à un point de consigne repéré dans le modèle mathématique et situé sur la ligne, surface ou volume à marquer ; puis marquer physiquement le point de repère sur le bâti existant.

Pour ce faire, le télémètre et les codeurs angulaires sont associés à une unité de traitement informatique intégrant d'une part un programme de production du modèle mathématique idéalisé de l'espace réel observé, et d'autre part un programme de correction des écarts entre la position réelle du point de repère visé par le télémètre et la position de consigne, lequel programme de correction est apte à piloter de façon automatique l'orientation du télémètre.

A noter que l'unité informatique est dépourvue de programme de calcul de superficies, et que DE 195 45 589 ne suggère aucunement d'utiliser le modèle mathématique produit pour calculer des superficies de surfaces planes.

FR 2 630 539 décrit un dispositif associant un télémètre, un théodolite et une unité de traitement informatique, pour la réalisation de levés d'architecture. L'unité de traitement intègre un programme informatique permettant de réaliser une représentation graphique de l'enveloppe d'une pièce de bâtiment, à partir des coordonnées sphériques de trois points (non alignés) relevés, depuis une station centrale, sur chacune des surfaces planes (sol, murs et plafond) constituant ladite enveloppe. Pour chaque surface plane, le programme calcule tout d'abord l'équation du plan correspondant, à partir des coordonnées des trois points relevés. Le programme calcule ensuite les équations des intersections de tous les plans pris deux à deux pour définir les arêtes de l'enveloppe considérée. FR 2 630 539 indique que le levé d'architecture ainsi réalisé peut être utilisé pour calculer la superficie des surfaces planes constituant l'enveloppe. Il est à noter que, lorsque la pièce est ainsi faite qu'il n'existe aucune station centrale permettant de voir au moins partiellement chacune des surfaces planes constituant l'enveloppe, on crée une cloison fictive (à partir d'un meuble ou autre objet à surface plane) séparant la pièce en deux pièces, dont on effectue les levés d'architecture comme précédemment expliqué, à partir de deux stations. Les représentations graphiques des deux pièces sont ensuite rassemblées en choisissant et en relevant une base de points de référence commune aux deux pièces, puis la cloison fictive apparaissant sur la représentation graphique globale obtenue est effacée par l'utilisateur.

Ainsi, pour réaliser un modèle informatique d'une surface plane polygonale, tant FR 2 630 539 que DE 195 45 589 enseignent de relever trois points sur ladite surface et trois points sur chacune des surfaces la délimitant. En d'autres termes et à titre d'exemple, pour modéliser le sol d'une pièce de bâtiment en vue du calcul de sa superficie (qui correspond généralement à la surface habitable de la pièce), il est nécessaire de relever ledit sol et l'ensemble des murs de la pièce. De façon plus générale, si la surface plane polygonale à métrer présente N côtés, l'utilisateur doit relever 3(N+1) points de mesure pour obtenir une modélisation de la surface.

L'inventeur a constaté que, dans la pratique, les dispositifs connus sont essentiellement utilisés pour réaliser des levés d'architecture complets en vue de disposer de plans (coupes, élévations, perspectives...) définissant le bâtiment ; ils ne sont employés pour calculer des superficies que lorsqu'il s'agit de métrer l'ensemble d'un bâtiment, c'est-à-dire à la fois les sols, murs et plafonds de chaque pièce du bâtiment. Il s'avère en effet que les procédés de relevé de surfaces antérieurs sont trop fastidieux pour justifier leur mise en oeuvre dans le seul but de mesurer, de façon ponctuelle, la superficie d'une surface quelconque donnée d'un bâtiment. Et il n'existe, à ce jour, aucun procédé ni dispositif permettant d'évaluer de façon simple, rapide et isolée, la superficie d'une surface de bâtiment telle que le sol, un mur ou le plafond d'une pièce de bâtiment.

L'inventeur a déterminé qu'il pourrait être utile de disposer d'un outil permettant de mesurer ou d'évaluer la superficie de surfaces de façon plus simple et plus rapide, en vue d'une utilisation tant intensive que ponctuelle de l'outil.

L'invention vise à satisfaire ce besoin nouvellement identifié, en proposant un procédé et un dispositif peu coûteux permettant d'évaluer la superficie de surfaces de façon extrêmement simple et rapide. En particulier, l'invention vise à proposer un dispositif et un procédé simples et rapides pour mesurer la superficie de surfaces planes polygonales, et notamment de surfaces planes polygonales de bâtiment.

Un autre objectif de l'invention est de proposer un procédé et un dispositif dont la mise en oeuvre ou l'utilisation ne nécessite aucune connaissance particulière ni aucune réflexion ou attention élevée de la part de l'utilisateur, et soit par conséquent à la portée d'une personne de capacité normale et d'attention moyenne. Un objectif de l'invention est de permettre de relever des surfaces planes polygonales de façon systématique, machinale et sans risque d'erreur.

Un autre objectif de l'invention est de fournir un dispositif et un procédé permettant d'évaluer la superficie d'une surface réelle quelconque avec une erreur inférieure à 5%, et permettant notamment de mesurer la superficie d'une surface plane polygonale avec une erreur inférieure à 1 %.

L'invention vise à atteindre tous ces objectifs sans renoncer aux avantages des dispositifs antérieurs connus, et en particulier sans renoncer à la possibilité de mesurer la superficie de l'ensemble des surfaces définissant l'enveloppe d'une pièce de bâtiment, y compris lorsque cette pièce est aménagée ou meublée.

Pour ce faire; l'invention concerne un procédé de mesure de la superficie de surfaces planes polygonales dans l'espace, dans lequel :
- on utilise un dispositif comprenant :
   0 un télémètre, monté sur un piétement par l'intermédiaire d'une monture à point central adaptée pour permettre à un utilisateur d'orienter le télémètre vers un point matériel d'une surface, dit point visé, de son choix, ledit télémètre étant adapté pour pouvoir délivrer un signal représentatif de la distance séparant le point central du point visé,
   0 des moyens de repérage angulaire dans l'espace de la direction, dite direction de visée, passant par le point central et le point visé, ces moyens de repérage angulaire étant adaptés pour pouvoir délivrer des signaux représentatifs de l'orientation de la direction de visée par rapport à un repère spatial centré sur le point central,
   0 le télémètre et les moyens de repérage angulaire étant ainsi adaptés pour pouvoir délivrer des signaux représentatifs des coordonnées sphériques du point visé par rapport audit repère spatial,
   0 des moyens de déclenchement, sur commande de l'utilisateur, de l'acquisition des coordonnées sphériques du point visé, aptes à déclencher une mémorisation de données numériques représentatives de ces coordonnées sphériques à partir des signaux délivrés par le télémètre et les moyens de repérage angulaire,
   0 une unité de traitement numérique, adaptée pour pouvoir modéliser des surfaces planes polygonales à partir des coordonnées sphériques acquises de points visés, dits points de mesure, qui permettent de déterminer topologiquement lesdites surfaces planes polygonales.

Le procédé selon l'invention est **caractérisé en ce que**, pour chaque surface plane polygonale à mesurer :
- on choisit une série de points de mesure permettant de déterminer topologiquement et individuellement ladite surface plane polygonale, ladite série comprenant au plus, pour chaque arête de la surface plane polygonale, deux points dont les projections sur ladite surface selon une direction prédéterminée appartiennent à ladite arête,
- on effectue une opération de modélisation de ladite surface, dans laquelle on relève les points de mesure de la série en orientant le télémètre successivement vers chaque point de mesure et en déclenchant l'acquisition de ses coordonnées sphériques, l'unité de traitement étant adaptée pour pouvoir :
   0 créer et mémoriser un modèle numérique géométrique de la surface plane polygonale en générant un segment ou une droite pour chaque arête de ladite surface, à partir des coordonnées sphériques acquises de deux points de mesure,
   0 calculer et enregistrer une valeur représentative de l'aire du modèle numérique ainsi créé.

L'invention concerne également un dispositif permettant de mettre en oeuvre un tel procédé, et notamment un dispositif de mesure de la superficie de surfaces planes polygonales dans l'espace, comprenant :
- un télémètre, monté sur un piétement par l'intermédiaire d'une monture à point central adaptée pour permettre à un utilisateur d'orienter le télémètre vers un point matériel d'une surface, dit point visé, de son choix, ledit télémètre étant adapté pour pouvoir délivrer un signal représentatif de la distance séparant le point central du point visé,
- des moyens de repérage angulaire dans l'espace de la direction, dite direction de visée, passant par le point central et le point visé, ces moyens de repérage angulaire étant adaptés pour pouvoir délivrer des signaux représentatifs de l'orientation de la direction de visée par rapport à un repère spatial centré sur le point central,
- le télémètre et les moyens de repérage angulaire étant ainsi adaptés pour pouvoir délivrer des signaux représentatifs des coordonnées sphériques du point visé par rapport audit repère spatial,
- des moyens de déclenchement, sur commande de l'utilisateur, de l'acquisition des coordonnées sphériques du point visé, aptes à déclencher une mémorisation de données numériques représentatives de ces coordonnées sphériques à partir des signaux délivrés par le télémètre et les moyens de repérage angulaire,
- une unité de traitement numérique adaptée pour modéliser des surfaces planes polygonales à partir des coordonnées sphériques acquises de points visés, dits points de mesure, qui permettent de déterminer topologiquement lesdites surfaces planes polygonales,
le dispositif selon l'invention étant **caractérisé en ce que** l'unité de traitement est adaptée pour pouvoir :
- créer et mémoriser un modèle numérique géométrique de chaque surface plane polygonale, à partir d'une série de points de mesure qui permet de déterminer topologiquement et individuellement ladite surface et comprend au plus, pour chaque arête de la surface plane polygonale, deux points dont les projections sur ladite surface selon une direction prédéterminée appartiennent à ladite arête, en générant un segment ou une droite pour chaque arête de la surface plane polygonale à partir des coordonnées sphériques acquises de deux points de mesure de la série,
- calculer et enregistrer une valeur représentative de l'aire de chaque modèle numérique ainsi créé.

L'invention consiste donc à générer, dans un modèle numérique, non pas des plans comme l'enseignent FR 2 630 539 et DE 195 45 589, mais des segments ou droites correspondant à des arêtes de surfaces planes polygonales. Ainsi, pour modéliser une surface plane polygonale ayant N arêtes (ou côtés), il suffit, selon l'invention, de relever au plus 2N points de mesure. Chaque surface plane est modélisée seule, indépendamment des surfaces qui la délimitent. En particulier, pour modéliser le sol d'une pièce de bâtiment, il n'est pas nécessaire de relever l'ensemble des murs délimitant ce sol ; il suffit de relever au plus deux points pour chaque arête du sol.

De surcroît, l'unité de traitement selon l'invention est adaptée pour pouvoir générer un segment ou une droite correspondant à une arête d'une surface plane polygonale, non seulement à partir de deux points de mesure visés sur cette arête, mais aussi à partir de deux points de mesure dont les projections sur l'arête selon une direction prédéterminée appartiennent à l'arête, c'est-à-dire à partir de deux points quelconques visés sur une surface plane contenant l'arête et la direction de projection. En particulier, pour modéliser le sol d'une pièce, il suffit par exemple de relever, pour chaque arête, au plus deux points de mesure situés sur le mur surplombant ladite arête. Cette caractéristique simplifie et écourte grandement les opérations de modélisation.

Le procédé selon l'invention est particulièrement simple et rapide. Il permet en outre de mesurer, de façon ponctuelle et isolée, une surface plane polygonale quelconque d'une pièce de bâtiment sans avoir à modéliser la totalité de l'enveloppe de cette pièce.

Il est à noter que, ainsi définis, les procédé et dispositif selon l'invention permettent de mesurer des surfaces planes polygonales. Mais ils permettent aussi d'évaluer de façon relativement fine la superficie d'une surface de bâtiment quelconque. En effet, l'une des idées de base ayant présidé à la conception de l'invention est, d'une part qu'un bâtiment est majoritairement formé de surfaces planes polygonales, et d'autre part que l'assimilation d'une surface quelconque (notamment non plane et/ou non polygonale) à une ou plusieurs surfaces planes polygonales convenablement choisies, par une méthode usuelle de discrétisation, peut fournir une approximation correcte de sa superficie. Ainsi, une surface réelle plane ayant un bord arrondi peut être modélisée par un modèle numérique polygonal dont la portion de périmètre correspondant au bord arrondi de la surface réelle est une ligne brisée (dont les sommets successifs correspondent à des points visés sur le bord arrondi). Par ailleurs, une surface réelle courbe (non plane) peut être modélisée par un modèle numérique polyédrique formé d'une pluralité de polygones plans dont les arêtes correspondent, pour la plupart, à des lignes de la surface réelle courbe.

Et l'inventeur a constaté qu'avec un faible degré de discrétisation, c'est-à-dire en modélisant une surface réelle quelconque avec un nombre limité (entre 1 et 5 par exemple) de polygones simples (ayant chacun moins de 7 sommets par exemple), on approche la superficie de la surface réelle avec une erreur inférieure à 5%, qui est l'erreur maximale autorisée par la loi "Carrez" dans le calcul des surfaces d'habitation. L'inventeur a ainsi tout d'abord démontré qu'il était possible d'évaluer de façon relativement précise la superficie de surfaces de bâtiment à l'aide d'un dispositif de mesure de surfaces planes polygonales.

Les moyens de repérage angulaire selon l'invention comprennent de préférence deux codeurs angulaires mesurant chacun l'angle formé par la direction de visée et un plan de référence du repère spatial.

Pour permettre à l'utilisateur d'orienter le télémètre vers un point visé de son choix, la monture comprend par exemple des moyens de manoeuvre du télémètre adaptés pour permettre une orientation manuelle de celui-ci par l'utilisateur. La monture est avantageusement constituée de deux cardans, un premier cardan monté librement pivotant sur le piétement autour d'un axe de rotation vertical, et un second cardan monté librement pivotant sur le premier cardan autour d'un axe de rotation horizontal, le télémètre étant fixé sur ce second cardan. Le télémètre peut ainsi être orienté vers chaque point de mesure de façon manuelle.

Cette version préférée de l'invention n'exclut pas la possibilité de doter la monture de moyens de manoeuvre du télémètre adaptés pour permettre une orientation automatique et programmée de celui-ci, tels que des moteurs d'entraînement en rotation des cardans précédemment décrits. Il s'avère cependant que de tels moyens grèvent inutilement le coût du dispositif et complique son utilisation.

Avantageusement et selon l'invention, l'acquisition des coordonnées sphériques de chaque point de mesure est déclenchée de façon manuelle à l'instant de visée dudit point de mesure. Pour ce faire, les moyens de déclenchement comprennent un organe de déclenchement manuel à effet immédiat. L'organe de déclenchement est par exemple un organe mécanique ou un organe à sensibilité thermique ou éventuellement optique apte à détecter la présence du doigt de l'utilisateur... Dans une version préférée, le dispositif intègre un télémètre connu usuel et l'organe de déclenchement selon l'invention correspond au bouton de mémorisation du télémètre, modifié de telle sorte qu'une pression dudit bouton déclenche non seulement la mémorisation de la distance mesurée par le télémètre mais aussi celle des angles mesurés par les moyens de repérage angulaire. Cette version de l'invention n'exclut cependant pas la possibilité de doter le dispositif de moyens de déclenchement programmables à effet différé.

Comme précédemment expliqué, pour créer le modèle numérique d'une surface plane polygonale, choisit une série de points de mesure permettant de déterminer topologiquement ladite surface. En particulier, on choisit une série de points de mesure, dite série complète, qui détermine à elle seule la topologie de la surface plane polygonale. L'unité de traitement selon l'invention est adaptée pour créer un modèle numérique d'une surface plane polygonale à partir des coordonnées sphériques acquises d'une telle série complète de points de mesure.

En particulier, avantageusement et selon l'invention, l'unité de traitement selon l'invention est adaptée pour créer un modèle numérique d'une surface plane polygonale à partir d'une série de points de mesure comprenant, pour chaque sommet de la surface plane polygonale, un point dont la projection sur ladite surface selon une direction prédéterminée coïncide avec ledit sommet. Dans le procédé selon l'invention, pour au moins une surface plane polygonale, on choisit une telle série de points de mesure. Le modèle numérique est dans ce cas construit à partir de points modélisant les sommets de la surface plane polygonale, lesquels points définissent des segments correspondant aux arêtes de la surface plane polygonale. Chaque extrémité d'un segment (sommet du modèle numérique) est généré à partir des coordonnées sphériques d'un point de mesure situé sur un axe qui passe par le sommet correspondant de la surface plane polygonale et est parallèle à une direction de projection prédéterminée (qui est la même pour tous les sommets). Ce point de mesure peut être le sommet lui-même. Une telle série de points de mesure détermine totalement, à elle seule, la topologie de ladite surface ; il s'agit d'une série complète.

Par exemple, pour mesurer une surface plane polygonale horizontale d'une pièce de bâtiment, telle que sol ou plafond horizontal, on choisit avantageusement une série (complète) de points de mesure comprenant, pour chaque sommet de la surface polygonale, un point dont la projection selon la direction verticale (il s'agit d'une projection orthogonale) sur ladite surface horizontale coïncide avec ledit sommet. Ainsi, si le dispositif est destiné à être utilisé pour mesurer la superficie de surfaces délimitant une pièce de bâtiment, l'unité de traitement est avantageusement adaptée pour créer un modèle numérique d'une surface plane polygonale horizontale, telle que sol ou plafond horizontal, à partir d'une série de points de mesure comprenant, pour chaque sommet de la surface polygonale, un point dont la projection verticale sur ladite surface horizontale coïncide avec ledit sommet. Ce point peut être le sommet lui-même ou un point situé sur un axe vertical passant par ce sommet, c'est-à-dire situé dans le coin de la pièce à l'intersection des deux murs verticaux entourant ledit sommet. Ce point peut donc être choisi à une hauteur quelconque dans le coin de la pièce, ce qui permet de s'affranchir du problème causé par les éventuels obstacles que constitue le mobilier.

Avantageusement et selon l'invention, en variante ou -de préférence- en combinaison, l'unité de traitement selon l'invention est par ailleurs adaptée pour créer un modèle numérique d'une surface plane polygonale à partir d'une série de points de mesure comprenant, pour chaque arête de la surface plane polygonale, deux points dont les projections sur la surface selon une direction prédéterminée appartiennent à ladite arête et sont distinctes ; dans le procédé selon l'invention, on choisit une telle série de points de mesure pour au moins une surface plane polygonale. Le modèle numérique est dans ce cas construit à partir de droites modélisant les arêtes de la surface plane polygonale. Chaque droite du modèle est générée à partir des coordonnées sphériques de deux points de mesure situés dans un plan défini par l'arête correspondante de la surface et par une direction de projection prédéterminée (la même pour toutes les arêtes). L'un (ou plusieurs) de ces points peut être situé sur l'arête elle-même, il peut même correspondre à une extrémité de l'arête, c'est-à-dire à un sommet de la surface polygonale. Une telle série de points détermine totalement, à elle seule, la topologie de ladite surface ; il s'agit d'une série complète.

Par exemple, pour mesurer une surface plane polygonale horizontale d'une pièce de bâtiment, telle que sol ou plafond horizontal, on choisit une série (complète) de points de mesure comprenant, pour chaque arête de la surface polygonale, deux points dont les projections selon la direction verticale (projection orthogonale) sur ladite surface horizontale appartiennent à ladite arête et sont distinctes. Ainsi, si le dispositif est destiné à être utilisé pour mesurer la superficie de surfaces délimitant une pièce de bâtiment, l'unité de traitement est avantageusement adaptée pour créer un modèle numérique d'une surface plane polygonale horizontale, telle que sol ou plafond horizontal, à partir d'une série de points de mesure comprenant, pour chaque arête de la surface polygonale, deux points dont les projections verticales sur ladite surface horizontale appartiennent à ladite arête et sont distinctes. En d'autres termes, il s'agit de points situés sur l'arête elle-même ou à la verticale de ladite arête, sur le mur vertical délimité par l'arête. Là encore, l'invention permet de s'affranchir du problème des obstacles que constitue le mobilier puisqu'il est possible de choisir deux points quelconques sur le mur vertical délimité par ladite arête, dès lors que ces deux points ne sont pas alignés selon la direction verticale (et présentent par conséquent des projections distinctes).

A noter que cette version du procédé selon l'invention conduit, certes, à relever jusqu'à deux fois plus de points de mesure que la version précédente consistant à relever des points correspondant aux sommets de la surface, mais chaque relevé est effectué de façon plus rapide puisque l'utilisateur n'a pas besoin de s'appliquer à viser un sommet (ou un coin vertical de la pièce si la surface à mesurer est horizontale) de façon précise et peut au contraire choisir un point quelconque sur l'arête (ou sur le mur vertical qui la surplombe).

Avantageusement et selon l'invention, l'opération de modélisation de chaque surface plane polygonale comprend de préférence une saisie initiale d'un ordre de démarrage de ladite opération et une saisie finale d'un ordre de terminaison de ladite opération, à l'aide d'une interface utilisateur du dispositif.

Si l'unité de traitement est adaptée pour créer des modèles numériques à partir de séries de points de mesure de types divers, telles que des séries de sommets, des séries de points d'arête, éventuellement des séries comprenant des points d'arête et des sommets, etc., on choisit, pour modéliser une surface plane polygonale, un type de série de points de mesure et on saisit, au démarrage de l'opération de modélisation (avant de relever un premier point de mesure), une information définissant le type de série choisi.

L'ordre de démarrage d'une opération de modélisation et l'information de définition du type de série de points de mesure choisi pour l'opération, peuvent être saisis concomitamment au moyen d'une seule et même commande de l'interface utilisateur. Cette commande peut également permettre de définir le type de surface à mesurer : surface horizontale, surface verticale, surface inclinée, surface quelconque... L'unité de traitement est par exemple adaptée pour permettre à l'utilisateur de saisir :
- un ordre de démarrage d'une opération de modélisation d'une surface plane polygonale quelconque à partir de points de mesure correspondant aux sommets de la surface, au moyen d'une première commande,
- un ordre de démarrage d'une opération de modélisation d'une surface plane polygonale quelconque à partir de points de mesure correspondant à des points d'arête de la surface, au moyen d'une deuxième commande,
- un ordre de démarrage d'une opération de modélisation d'une surface plane polygonale horizontale -respectivement verticale- à partir de points de mesure correspondant aux sommets de la surface, au moyen d'une troisième -respectivement quatrième- commande,
- un ordre de démarrage d'une opération de modélisation d'une surface plane polygonale horizontale -respectivement verticale- à partir de points de mesure correspondant à des points d'arête de la surface, au moyen d'une cinquième -respectivement sixième- commande, etc..

Dans de nombreux cas, la géométrie (ou topologie) de la surface plane polygonale est telle qu'il est possible de déterminer un point d'emplacement du dispositif, dit point d'observation, duquel tous les points de mesure sont visibles. Les points de mesure sont alors tous relevés depuis ce même point d'observation.

Lorsque tel n'est pas le cas, l'opération de modélisation de la surface plane polygonale comprend les étapes suivantes :
- on relève des points de mesure de la série correspondante qui sont visibles depuis un premier point d'observation,
- on déplace le point central du dispositif en un deuxième point d'observation duquel est visible au moins un autre point de mesure de ladite série, non visible depuis le premier point d'observation,
- on relève des points, dits points de recalage, depuis le deuxième point d'observation, lesdits points de recalage étant choisis de façon à permettre de déterminer la position du deuxième point d'observation relativement au premier point d'observation,
- on relève le(s) point(s) de mesure visible(s) depuis le deuxième point d'observation, l'unité de traitement étant adaptée pour calculer les coordonnées, dans le repère spatial du premier point d'observation, du deuxième point d'observation et du(des) point(s) de mesure relevé(s) depuis celui-ci.

A noter que le premier point d'observation est choisi de façon à pouvoir relever depuis ce point un nombre maximal de points de mesure de la série.

Il est également de préférence choisi de telle sorte que soit visible depuis celui-ci au moins un nombre de points de mesure suffisant pour permettre de modéliser au moins une arête de la surface polygonale également visible depuis un deuxième point d'observation : deux points correspondant aux deux extrémités (sommets) de cette arête (extrémités elles-mêmes ou points dont les projections sur la surface selon une direction prédéterminée coïncident avec ces extrémités) sont alors choisis comme points de recalage pour le deuxième point d'observation. Le premier point d'observation peut aussi être choisi de telle sorte que soit visible, depuis les deux points d'observation, au moins un nombre de points de mesure suffisant pour permettre de modéliser au moins deux lignes d'arête non parallèles de ladite surface, les termes "ligne d'arête" désignant la droite (infinie) portant l'arête (segment fini) : deux points correspondant à deux points quelconques sur chacune des ces deux arêtes (soit quatre points au total) sont alors choisis comme points de recalage pour le deuxième point d'observation. Dans les deux cas, les points de recalage sont des points visés sur la surface plane polygonale à mesurer ou sur une surface délimitant celle-ci, et non des points visés sur une cible réfléchissante installée par l'utilisateur. Le recalage est donc précis. En outre, contrairement à FR 2 630 539, aucune "cloison fictive" n'est définie, ce qui diminue les risques d'erreur (le risque existe en effet, dans le procédé de FR 2 630 539, d'oublier de supprimer cette cloison dans le modèle...).

A noter également qu'il peut être nécessaire de déplacer le dispositif (c'est-à-dire son point central) en un troisième point d'observation, s'il reste encore des points de mesure à relever (points non visibles depuis les deux premiers points d'observation), et ainsi de suite jusqu'à ce que l'ensemble des points de mesure de la série soit relevé. La position de chaque point d'observation additionnel doit être repérée dans le repère spatial du premier point d'observation, en relevant des points de recalage convenablement choisis.

Comme défini initialement, l'unité de traitement est adaptée pour créer un modèle numérique à partir des coordonnées sphériques acquises d'une série de points de mesure qui permet de déterminer topologiquement la surface plane polygonale, et notamment d'une série complète de points de mesure qui détermine à elle seule cette topologie.

En combinaison, avantageusement et selon l'invention, l'unité de traitement est également adaptée pour :
- permettre à l'utilisateur, par l'intermédiaire d'une interface utilisateur graphique, de saisir des données, dites données de contrainte, permettant de définir des contraintes géométriques à imposer à un modèle numérique, parmi lesquelles des données permettant de générer des objets géométriques dans le modèle numérique et des données permettant de générer des relations géométriques entre des objets géométriques du modèle numérique,
- gérer des données de contrainte saisies de façon à pouvoir créer un modèle numérique d'une surface plane polygonale en générant des segments et/ou droites à partir des coordonnées sphériques acquises d'une série de points de mesure, dite série réduite, et des données de contrainte saisies d'une série de contraintes géométriques, lesdites séries de points de mesure et de contraintes permettant, en combinaison, de déterminer la topologie de ladite surface plane polygonale. En d'autres termes, les points de mesure et les contraintes géométriques sont choisis de sorte que, en combinaison, ils déterminent (totalement) la topologie de la surface plane polygonale, la série réduite de points de mesure ne déterminant que partiellement, à elle seule, cette topologie.

L'invention s'étend donc également à un procédé de mesure dans lequel, pour au moins une surface plane polygonale à mesurer :
- on choisit d'une part une série de points de mesure, dite série réduite, et d'autre part une série de contraintes géométriques à imposer à un modèle numérique de la surface plane polygonale, parmi lesquelles au moins un objet géométrique à imposer audit modèle numérique et/ou au moins une relation géométrique à imposer entre des objets géométriques dudit modèle numérique, lesdites séries de points de mesure et de contraintes géométriques étant choisies de sorte que, en combinaison, elles déterminent la topologie de la surface plane polygonale,
- on effectue une opération de modélisation de ladite surface, dans laquelle on relève chaque point de mesure de la série correspondante et on saisit, par l'intermédiaire d'une interface utilisateur graphique, des données, dites données de contrainte, permettant de définir chaque contrainte géométrique de la série correspondante,
- l'unité de traitement étant adaptée pour :
   ◊ permettre à l'utilisateur de saisir de telles données de contrainte, et gérer lesdites données,
   ◊ créer un modèle numérique de la surface plane polygonale en générant des segments et/ou droites à partir des coordonnées sphériques acquises de la série réduite de points de mesure et des données de contrainte saisies de la série de contraintes.

L'unité de traitement selon l'invention est par exemple adaptée pour permettre à l'utilisateur de saisir des données de contrainte générant des objets géométriques choisis parmi un point, un segment, un polygone, etc.. Dans le procédé selon l'invention, on saisit au moins une donnée de contrainte générant un tel objet géométrique. L'interface utilisateur est avantageusement adaptée pour permettre à l'utilisateur de dessiner des objets géométriques (points, segments, polygones...), soit par des moyens graphiques (tablette graphique et stylet...), soit par des commandes prédéfinies (touches clavier ou icônes affichées par un écran et sélectionnées au moyen d'un curseur, commandant respectivement la génération d'un point, d'un segment, d'un polygone donné...), soit par des lignes de commande descriptives...

Avantageusement et selon l'invention, l'unité de traitement est également adaptée pour :
- permettre à l'utilisateur de saisir des données de contrainte générant des objets géométriques courbes tels qu'un arc, et notamment un arc de cercle, (dans le procédé selon l'invention, on saisit au moins une donnée de contrainte générant un objet géométrique courbe),
- créer un modèle numérique plan non polygonal intégrant un(des) objet(s) géométrique(s) courbe(s), à partir de telles données de contrainte (et d'une série réduite de points de mesure),
- calculer une valeur représentative de l'aire du modèle numérique ainsi créé.

Par exemple, l'unité de traitement est adaptée pour permettre de générer un arc de cercle ou tout autre primitive passant par trois points et notamment par trois points de mesure...

Dans cette version de l'invention, le dispositif permet donc également de mesurer des surfaces planes non polygonales, et de fournir une approximation de la superficie d'une surface non polygonale (plane ou non) encore plus précise.

L'unité de traitement selon l'invention est par ailleurs de préférence adaptée pour permettre à l'utilisateur de saisir des données de contrainte générant des relations géométriques choisies parmi un angle entre deux segments du modèle numérique, une orientation d'un segment, une longueur d'un segment, une jonction entre deux segments, un parallélisme de deux segments... Dans le procédé selon l'invention, on saisit au moins une donnée de contrainte générant une telle relation géométrique. Là encore, ces données sont de préférence saisies par l'intermédiaire de commandes prédéfinies (touches clavier, icônes sur une interface graphique...).

A noter que les relations géométriques imposées peuvent porter sur des objets géométriques existants du modèle numérique générés par mesure (points correspondant à des points de mesure, segments définis par des points de mesure...), et/ou sur des objets géométriques rajoutés au modèle numérique par l'utilisateur via l'interface graphique, c'est-à-dire générés par des données de contrainte (points ou segments de contrainte venant compléter la série réduite de points de mesure).

Les contraintes à imposer au modèle numérique sont choisies par l'utilisateur sur la base d'une évaluation visuelle, qui est certes approximative. En effet, un angle n'est jamais parfaitement droit dans un bâtiment, un arête jamais réellement rectiligne, ni verticale ou horizontale. Mais les résultats obtenus en terme de calcul d'aire sont malgré tout précis, l'impact de l'erreur due aux hypothèses faites par l'utilisateur pour définir les contraintes à imposer étant très faible au regard de l'aire calculée.

La gestion de telles contraintes (objets et relations) par l'unité de traitement permet de limiter le nombre de points de mesure à relever, par l'introduction de contraintes simples telles que, par exemple, la création d'un sommet sur le modèle numérique et d'un angle droit en ce sommet, ou encore la création d'un segment défini par un point de mesure et une donnée de contrainte saisie imposant l'orientation du segment.

Cette possibilité devient particulièrement avantageuse pour certaines surfaces planes polygonales complexes, pour lesquelles il ne peut être défini aucun point d'observation duquel soit visible l'ensemble des points de mesure d'une série déterminant totalement la topologie de la surface. Alors, selon l'invention, on choisit une série réduite de points de mesure pour laquelle il existe au moins un point d'observation duquel est visible l'ensemble des points de mesure de la série, on relève lesdits points depuis ce seul point d'observation, on saisit des données de contrainte qui, en combinaison avec les points de mesure, déterminent la topologie de la surface et donc le modèle numérique. En particulier, on saisit des données de contrainte générant, dans le modèle numérique, un ou des point(s) de contrainte et imposant des relations géométriques (angles, jonctions...) entre les différents segments ou points du modèle, de façon à définir une série complète de points de construction (points de mesure et points de contrainte) déterminant totalement la topologie de la surface plane polygonale.

Un tel procédé permet d'éviter d'avoir à relever des points de mesure depuis plusieurs points d'observation distincts. Il permet également de relever moins de points de mesure en tirant profit des caractéristiques géométriques remarquables de la surface à mesurer, y compris dans le cas où une série complète de points de mesure peut être relevée depuis un unique point d'observation. Le nombre de mesures à effectuer et le temps consacré au relevé de la surface polygonale sont ainsi considérablement réduits. Le procédé selon l'invention est particulièrement rapide et efficace.

Selon la géométrie de la surface plane polygonale, il peut cependant être nécessaire de combiner, d'une part des relevés de points de mesure depuis plusieurs points d'observation distincts, et d'autre part l'utilisation de contraintes géométriques permettant de déterminer totalement la topologie de la surface plane polygonale (en générant par exemple des points de contrainte venant s'ajouter aux points de mesure). En tout état de cause, l'utilisation de contraintes réduit le nombre de points de mesure à relever.

A noter que, lorsque des contraintes géométriques sont utilisées, les différentes étapes de l'opération de modélisation (relevé d'un point de mesure, saisie d'une donnée de contrainte...) sont effectuées dans un ordre ou un autre, selon les contraintes choisies.

A noter aussi que, lorsque des contraintes géométriques sont utilisées, les points de mesure de la série réduite peuvent, à l'instar d'une série complète dans le cas d'une opération de modélisation sans utilisation de contraintes, être choisis de façon à correspondre à des sommets ou à des points d'arête de la surface plane polygonale. Ainsi, on choisit par exemple une série réduite de points de mesure comprenant, pour plusieurs des sommets de la surface polygonale, un point dont la projection sur ladite surface selon une direction prédéterminée coïncide avec ledit sommet. En variante, on choisit une série réduite de points de mesure comprenant, pour plusieurs des arêtes de la surface polygonale, deux points dont les projections sur la surface selon une direction prédéterminée appartiennent à ladite arête et sont distinctes.

Avantageusement et selon l'invention (et contrairement aux dispositif antérieurs connus), l'unité de traitement est adaptée pour créer des modèles numériques géométriques en deux dimensions. En variante ou en combinaison, l'unité de traitement est adaptée pour créer des modèles numériques géométriques en trois dimensions.

Par ailleurs, l'unité de traitement est de préférence adaptée pour gérer des contraintes non orientées, selon une approche variationnelle. Une contrainte non orientée s'exprime sous la forme d'une équation algébrique. Un problème est dit variationnel si ce problème peut être décomposé en un ensemble de sous-problèmes qui peuvent être résolus simultanément. En variante, l'unité de traitement est adaptée pour gérer des contraintes orientées, selon une approche paramétrique. Une contrainte orientée peut s'exprimer sous la forme d'une fonction explicite. Un problème est dit paramétrique si ce problème peut être décomposé en un ensemble de sous-problèmes qui peuvent se résoudre individuellement les uns après les autres d'une façon séquentielle, dans un ordre donné.

Avantageusement et selon l'invention, l'unité de traitement est adaptée pour calculer et enregistrer une valeur représentative de la longueur d'au moins un, et de préférence de chaque, segment d'un modèle numérique créé, ainsi qu'une valeur représentative de la longueur du périmètre du modèle numérique, c'est-à-dire de la somme des longueurs de tous les segments dudit modèle. Le dispositif selon l'invention permet ainsi de mesurer des linéaires, tels que le linéaire de murs d'une pièce de bâtiment qui correspond au périmètre du sol de la pièce, c'est-à-dire à la longueur du contour du modèle numérique polygonal représ entant le sol (obtenue par la somme des longueurs de ses segments).

A noter enfin que le modèle numérique créé fournit un plan de la surface plane polygonale, qui peut être visualisé, imprimé, éventuellement modifié... Un modèle numérique consolidé (tel que défini plus loin) en trois dimensions fournit, outre les plans des surfaces correspondantes, des vues en perspective de la pièce, du bâtiment... En d'autres termes, bien qu'il ne s'agisse pas là de l'objectif de l'invention, le dispositif selon l'invention est également adapté, à l'instar de celui de FR 2 630 539, pour produire des plans de bâtiments existants, qui peuvent être ensuite réutilisés par les architectes, entrepreneurs, etc.., pour le suivi d'un chantier, la réalisation de modifications, la conception d'un autre bâtiment...

L'invention concerne également un dispositif et un procédé de mesure caractérisés en combinaison par tout ou partie des caractéristiques mentionnées ci-dessus et ci-après.

D'autres buts, caractéristiques et avantages de l'invention apparaîtront à la lecture de la description suivante qui se réfère aux figures annexées représentant des modes de réalisation préférentiels de l'invention donnés uniquement à titre d'exemples non limitatifs, et dans lesquelles :
- la figure 1 est une vue en perspective d'un dispositif selon l'invention,
- la figure 2 est un plan, en coupe horizontale, d'une pièce de bâtiment dont la superficie au sol est à mesurer selon l'invention,
- la figure 3 est une vue en perspective d'une partie de la pièce illustrée à la figure 2,
- la figure 4 est une vue en perspective et en transparence d'une autre pièce de bâtiment dont la superficie au sol est à mesurer selon l'invention,
- la figure 5 est une vue en perspective et en transparence d'une autre pièce de bâtiment dont la superficie des murs et plafonds est à mesurer selon l'invention.

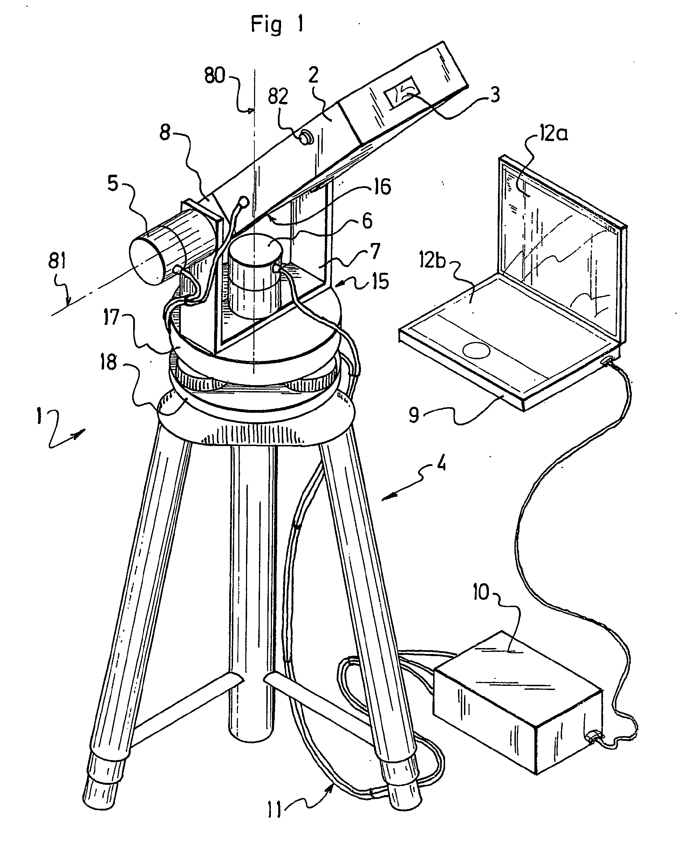

La figure 1 illustre un dispositif de mesure 1 selon l'invention. Il comprend :
- un télémètre 2 à laser 3, apte à mesurer une grandeur représentative de la distance séparant un point de référence associé au télémètre et un point matériel quelconque visé sur une surface, et à délivrer un signal correspondant ; le point visé est repéré par le laser du télémètre,
- un piétement 4 en forme de trépied,
- une monture 15 pour le montage du télémètre 2 sur le trépied 4, comprenant un socle 17 fixé sur un plateau supérieur 18 du trépied, un premier cardan 7 dont l'âme est montée rotative sur le socle 17 autour d'un axe vertical 80 passant par le centre dudit socle, un second cardan 8 monté, par l'extrémité de ses branches, sur les branches du premier cardan 7 de façon à pouvoir pivoter autour d'un axe horizontal 81 passant par les extrémités des branches du premier cardan ; les cardans forment ainsi une monture à point central 16, lequel point (virtuel) correspond à l'intersection des axes de rotation vertical et horizontal 80 et 81 ; le télémètre 2 est fixé sur l'âme du second cardan 8 par sa façade postérieure de sorte que son axe longitudinal coupe l'axe vertical 80 ; le télémètre est par ailleurs paramétré de sorte que son point de référence coïncide avec le point central 16 de la monture, c'est-à-dire soit situé à l'arrière de sa façade postérieure, à une distance correspondant à la distance séparant ladite façade de l'axe horizontal 81,
- des moyens de repérage angulaire, comprenant un premier codeur angulaire 6 adapté pour mesurer une grandeur représentative de l'angle de rotation du cardan 7 autour de l'axe vertical 80 (angle formé par l'axe longitudinal de l'âme du cardan 7 et un axe de référence horizontal fixe par rapport au socle 17) et pour délivrer un signal correspondant, et un second codeur angulaire 5 adapté pour mesurer une grandeur représentative de l'angle de rotation du cardan 8 autour de l'axe horizontal 81 (angle formé par l'axe longitudinal du télémètre 2 et un axe de référence horizontal fixe par rapport au premier cardan 7) et pour délivrer un signal correspondant ; les moyens de repérage permettent ainsi de repérer l'orientation de la direction de visée du télémètre, correspondant à son axe longitudinal, par rapport à un repère spatial centré sur le point central 16 du dispositif; la distance mesurée par le télémètre et les angles mesurés par les codeurs angulaires constituent les coordonnées sphériques du point visé dans le repère spatial ; les codeurs angulaires présentent de préférence une précision supérieure (c'est-à-dire inférieure en valeur) à 4/10ième de degré. Une telle précision est tout à fait suffisante pour obtenir des résultats de calcul d'aire de surface plane polygonale avec une erreur inférieure à 1%,
- des câbles de communication 11 permettant de transmettre les signaux délivrés par le télémètre et les codeurs angulaires à une unité de traitement numérique 9 ; la transmission s'effectue via un boîtier électronique 10 de pré-traitement, transformant les signaux délivrés par le télémètre et les codeurs en des signaux de données numériques représentatives des coordonnées sphériques du point visé ; en variante, les câbles de transmission reliant le télémètre au boîtier électronique sont remplacés par des moyens de transmission d'ondes radiofréquence directement entre le télémètre et l'unité de traitement,
- un organe de déclenchement de l'acquisition des coordonnées sphériques du points visé, formé par une touche 82 (cette touche est illustrée sur une façade latérale du télémètre par souci de clarté du dessin, mais peut être agencée en un autre endroit du dispositif, et notamment sur la façade supérieure du télémètre comme tel est le cas de la touche de mémorisation d'un télémètre usuel connu) ; une pression exercée par l'utilisateur sur cette touche de déclenchement entraîne une mémorisation, dans l'unité de traitement, des données représentatives des coordonnées sphériques du point visé à l'instant de la pression ; en particulier, une pression de la touche 82 entraîne la mémorisation dans l'unité de traitement 9 d'une donnée représentative de la distance mesurée par le télémètre 2, et la transmission, par le boîtier électronique 10, d'un ordre de mesure des angles par les codeurs angulaires 5 et 6 et de mémorisation de données correspondantes dans l'unité de traitement ; dans le cas où la liaison entre le télémètre et l'unité de traitement est assurée par des ondes radio, l'ordre de mesure par les codeurs est généré (sur pression de la touche 82) par l'unité de traitement et transmise aux codeurs via le boîtier électronique,
- une interface utilisateur graphique, comprenant notamment un clavier de saisie 12b et un écran d'affichage 12a permettant notamment d'afficher les modèles numériques créés par l'unité de traitement 9 ; dans l'exemple illustré, l'unité de traitement et l'interface utilisateur du dispositif sont celles d'un ordinateur personnel portable. Il peut également s'agir de celles d'un dispositif de traitement numérique de type dit PDA ("Personal Digital Assistant"), c'est-à-dire d'un ordinateur de poche ou tout autre dispositif informatique portatif (agendas électroniques, téléphones portables communicants et autres terminaux disposant d'une unité de traitement numérique et d'une interface graphique).

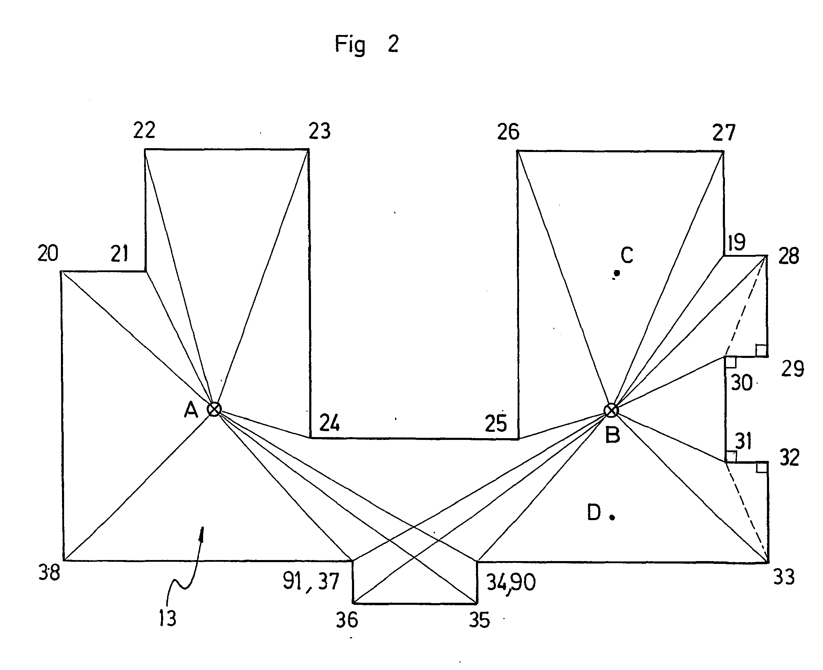

La figure 2 illustre le plan (coupe horizontale) d'une pièce de bâtiment, dont on souhaite mesurer la superficie du sol 13 qui forme une surface plane polygonale complexe. Dans l'exemple illustré, pour effectuer cette mesure, on a choisi de construire le modèle numérique à partir de points de construction correspondant aux sommets de la surface plane polygonale.

Selon l'invention, on choisit, parmi les sommets de la surface, une série réduite de sommets à modéliser à partir d'une série de points de mesure correspondante, et une série complémentaire de sommets à modéliser à partir d'une série correspondante de points, dits points de contrainte, générés par introduction de contraintes dans le modèle numérique au cours de son élaboration. Les points de mesure et les contraintes sont choisis de sorte qu'ils déterminent totalement la topologie de la surface à mesurer et de sorte que le relevé des points de mesure s'effectue avec un minimum de manipulations et de déplacements, depuis un nombre minimal de points d'observation. Dans l'exemple illustré, deux étapes de relevé à partir de deux points d'observation distincts sont nécessaires pour disposer d'un nombre de points de mesure suffisant pour permettre de déterminer la topologie de la surface, en combinaison avec des contraintes. On détermine ainsi une série réduite de points de mesure comprenant dix-huit points (parmi les vingt sommets de la surface) et une série de contraintes permettant de définir totalement deux points de contrainte correspondant aux deux sommets manquants.

On saisit un ordre de démarrage d'une opération de modélisation d'une surface plane polygonale horizontale à partir de ses sommets, au moyen d'une commande correspondante (sélection dans un menu d'ordre de démarrage...).

On place le dispositif 1 en un premier point d'observation A. Pour pallier un éventuel défaut de planéité du sol ou d'horizontalité du socle 17 (dû à un mauvais réglage du trépied), on saisit un ordre d'initialisation de l'horizontale, on vise un point d'une surface quelconque selon une direction de visée horizontale telle qu'indiquée par un niveau porté par le télémètre, et on relève ledit point.

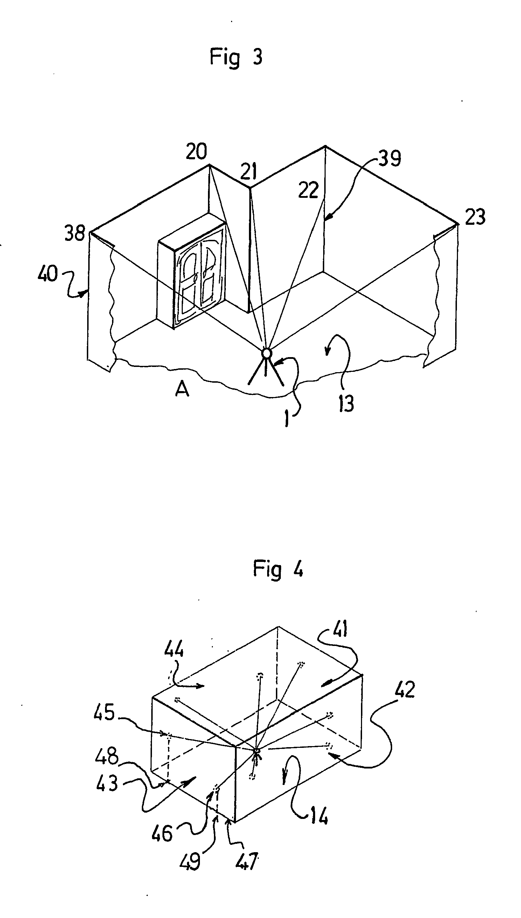

Ensuite, pour chaque coin de la pièce visible depuis le premier point d'observation A, on relève un point de mesure situé sur l'arête murale verticale définissant ledit coin, c'est-à-dire un point dont la projection verticale sur le sol coïncide avec un sommet de la surface plane polygonale formant le sol ; pour ce faire, on oriente le télémètre vers le point de mesure et on déclenche l'acquisition de ses coordonnées sphériques au moyen du bouton 82. On relève ainsi les points de mesure 20, 21, 22, 23, 24, 34, 35, 37 et 38. Chaque point de mesure peut être choisi à une hauteur quelconque dans le coin de la pièce. Ainsi, et à titre d'exemple, le point de mesure 38, tel qu'illustré à la figure 3, est pris au sommet de l'arête murale verticale 40 (à l'intersection du plafond et des deux murs formant cette arête) ; le point de mesure 22 est pris à une hauteur médiane de l'arête verticale 39. Il est ainsi possible de choisir des points pour lesquels aucun obstacle ne vient s'interposer entre le télémètre et le point de mesure.

On déplace ensuite le télémètre en un second point d'observation B duquel sont visibles d'autres coins de la pièce (non relevés depuis le premier point A), et on initialise de nouveau l'horizontale, comme précédemment expliqué.

On relève deux points de recalage correspondant chacun à un sommet de la surface polygonale dont a déjà été relevé un point de mesure correspondant depuis le premier d'observation A. Pour ce faire, on saisit une commande, dite commande de recalage ; on sélectionne sur le modèle numérique le sommet du modèle (si le modèle est en deux dimensions) ou l'arête verticale du modèle (si le modèle est en trois dimensions) correspondant au point de mesure 34 ; on relève un point de recalage 90 situé sur l'arête murale sur laquelle a été relevé le point de mesure 34. On réitère l'opération en relevant un point de recalage 91 situé sur l'arête murale sur laquelle a été relevé le point de mesure 37. L'unité de traitement est adaptée pour en déduire la position du point d'observation B relativement auxdites arêtes murales et calculer les coordonnées sphériques du point B dans le repère spatial du point A.

Pour chaque coin de la pièce non visible depuis le premier point d'observation A et visible depuis le second point d'observation B, on relève un point de mesure situé sur l'arête murale verticale définissant ledit coin, à une hauteur quelconque. Sont ainsi relevés les points de mesure 25, 26, 27, 19, 28, 30, 31, 33 et 36. Leurs coordonnées sphériques sont calculées dans le repère spatial du point d'observation A.

On rajoute, dans le modèle numérique obtenu, un point de contrainte 29 entre les sommets du modèle générés à partir des points de mesure 28 et 30, et on impose la présence d'un angle droit aux sommets du modèle correspondant aux points de mesure 30 et de contrainte 29 (ou bien aux points 28 et 29, ou encore aux points 28 et 30...), en saisissant des données de contrainte correspondantes. De même, on crée un point de contrainte 32 entre les sommets générés à partir des points de mesure 31 et 33, et on impose la présence d'un angle droit aux sommets correspondant aux points 31 et 32.

L'unité de traitement est adaptée pour générer les segments reliant les points de construction (sommets du modèle) consécutifs créés dans le modèle numérique.

Enfin, on saisit un ordre de terminaison de l'opération de modélisation de la surface. L'unité de traitement 9 calcule alors l'aire du modèle numérique créé, et délivre une valeur résultante à l'utilisateur via l'écran d'affichage 12a.

En variante, il est possible de modéliser l'ensemble des sommets de la surface plane polygonale uniquement à partir de points de mesure, c'est-à-dire à partir d'une série complète de points de mesure. Il est dans ce cas nécessaire d'effectuer trois étapes de relevé à partir de trois points d'observation A, C et D, une étape de recalage devant être exécutée pour les deux points d'observation C et D, en relevant depuis chacun de ces points deux points de recalage correspondant à des sommets précédemment modélisés. Un tel procédé est plus long, et l'on comprend aisément l'intérêt de la capacité de l'unité de traitement à gérer des contraintes.

A l'instar de l'exemple précédent, pour mesurer la superficie au sol d'une pièce de bâtiment rectangulaire, on peut effectuer une opération de modélisation consistant à modéliser tous les sommets du sol rectangulaire à partir de points de mesure relevés dans les coins de la pièce. La figure 4 illustre une variante de l'invention pour mesurer une telle surface.

Selon l'invention, on modélise les arêtes du sol rectangulaire 14 à partir d'une série complète de points de mesure comprenant, pour chaque arête, deux points matériels dont la projection verticale sur le sol appartient à ladite arête. L'unité de traitement 9 selon l'invention est en effet adaptée, pour chaque point de mesure, pour calculer les coordonnées d'un point, dit point de projection, correspondant à la projection du point de mesure sur un plan horizontal prédéterminé, et générer une droite dans le modèle numérique à partir de deux points de projection.

Ainsi, selon l'invention, on place le dispositif 1 en un point d'observation quelconque de la pièce, par exemple sensiblement central. On saisit un ordre de démarrage d'une opération de modélisation d'une surface plane polygonale horizontale à partir de ses arêtes, et on initialise l'horizontale. Puis, on relève deux points de mesure distincts sur chacun des quatre murs délimitant la pièce, tels les points 45 et 46 sur le mur 43 (dont les projections verticales 48, 49 sur le sol 14 sont situées sur l'arête 47). Les points sont choisis en un emplacement quelconque sur le mur (dès lors que les deux points de mesure d'un même mur sont distincts et non alignés verticalement). On saisit enfin un ordre de terminaison de l'opération de modélisation. L'unité de traitement est adaptée pour calculer alors l'aire du modèle numérique créé.

A noter que pour que la modélisation soit correcte, il faut relever deux points successifs sur un premier mur 41 par exemple, puis deux points successifs sur l'un quelconque des autres murs, tel que le mur 42 par exemple, puis deux points successifs sur un autre mur (43 par exemple), puis deux points successifs sur le dernier mur 44. En effet, l'unité de traitement 9 est programmée pour générer, dans le modèle, une première droite à partir des deux premiers points de mesure relevés puis une deuxième droite pour les deux points suivants, et ainsi de suite. Seuls sont conservés, dans le modèle créé, les segments délimités par deux points d'intersection de droites. Les portions de droite infinies prolongeant ces segments de part et d'autre sont automatiquement supprimées.

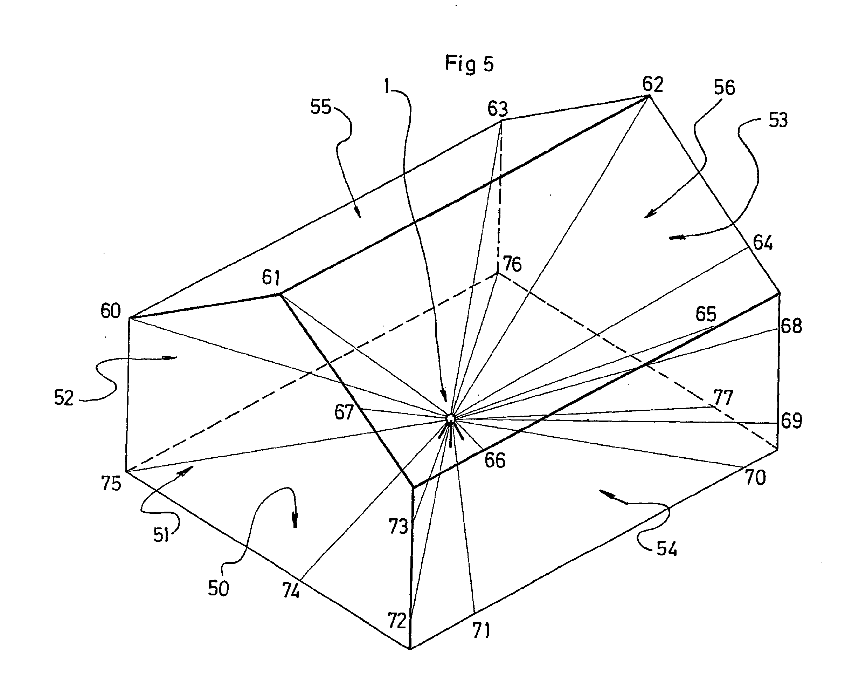

La figure 5 illustre divers procédés selon l'invention pour mesurer chacune des surfaces planes polygonales délimitant une pièce de bâtiment.

Le mur 52 est modélisé à partir d'une série complète de points de mesure constituée des sommets 60, 75, 76, 63 du mur. De même, le rampant sous toiture 55 est modélisé à partir d'une série complète de points de mesure constituée des sommets 60, 61, 62, 63 du rampant.

Chacune des autres surfaces est modélisée à partir d'une série complète de points de mesure constituée de deux points visés sur chaque arête de la surface, certains points d'arête correspondant également à des sommets de la surface. Ainsi, le mur 54 est modélisé à partir d'une série de points de mesure constituée des points de mesure 65 et 66 sur une première arête du mur, des points de mesure 68 et 69 sur une deuxième arête du mur, des points de mesure 70 et 71 sur une troisième arête du mur et des points de mesure 72, 73 sur sa dernière arête. De même, le rampant sous toiture 56 est modélisé à partir des points de mesure 62 et 64 pris sur une première arête du rampant, des points de mesure 61 et 67 pris sur une deuxième arête, des points de mesure 61 et 62 pris sur une troisième arête du rampant et des points de mesure 65 et 66 pris sur la dernière arête du rampant. Les arêtes du mur 51 sont modélisées par des droites à partir des paires de points de mesure 74 et 75, 75 et 60, 60 et 61, 61 et 67, 73 et 72. De même, les arêtes du mur 53 sont modélisées à partir des paires de points de mesure 77 et 76, 76 et 63, 63 et 62, 62 et 64, 68 et 69. Les arêtes du sol 50 sont modélisées à partir des paires de points de mesure 74 et 75, 75 et 76, 76 et 77, 70 et 71.

L'opération de modélisation de chacune des surfaces commence par la saisie d'un ordre de démarrage de l'opération et se termine par la saisie d'un ordre de terminaison de l'opération.

On peut souhaiter modéliser l'ensemble de ces surfaces sur un seul et unique modèle, dit modèle consolidé, regroupant en trois dimensions ou en deux dimensions les modèles numériques de chacune des surfaces.

De surcroît, compte tenu de la géométrie du lieu, les surfaces à mesurer possèdent des arêtes communes. Lorsqu'une première surface est modélisée et que l'on démarre la modélisation d'une deuxième surface adjacente à la première, il peut donc être avantageux, pour la création du deuxième modèle numérique, de réutiliser la modélisation de l'arête commune aux deux surfaces, réalisée dans le premier modèle.

Pour ces deux raisons, l'unité de traitement selon l'invention est avantageusement adaptée pour :
- créer un modèle consolidé regroupant une pluralité de modèles numériques correspondant chacun à une surface plane polygonale,
- créer un modèle numérique d'une surface à partir, d'une part d'objets géométriques (en l'exemple, un segment et ses deux sommets) d'un autre modèle numérique existant appartenant au même modèle consolidé (ce qui revient à imposer des contraintes géométriques au modèle en cours d'élaboration), et d'autre part d'une série réduite de points de mesure et éventuellement de contraintes additionnelles permettant, en combinaison avec les objets géométriques réutilisés, de déterminer totalement la topologie de la surface.

Ainsi, pour mesurer la pièce illustrée à la figure 5, on place le dispositif 1 en un point d'observation quelconque, par exemple central. Préalablement à une première opération de modélisation d'une surface, on saisit un ordre de démarrage d'une session de modélisation d'une pluralité de surfaces planes polygonales. A partir de quoi, l'unité de traitement est adaptée pour créer, dans un même et unique modèle consolidé (c'est-à-dire dans un même fichier), des modèles numériques de diverses surfaces planes polygonales, tant qu'aucun ordre de terminaison de la session de modélisation n'est saisi.

On initialise l'horizontale comme précédemment expliqué, l'unité de traitement étant adaptée pour conserver les données repérant l'horizontale telles qu'elles sont relevées par cette opération d'initialisation, tant qu'aucun ordre d'initialisation n'est de nouveau saisi. Cette fonctionnalité est avantageuse compte tenu que le dispositif n'est pas déplacé entre les opérations consécutives de modélisation des diverses surfaces de la pièce.

On commence alors, par exemple, par modéliser le mur 52. Pour ce faire, on saisit un ordre de démarrage d'une opération de modélisation d'une surface plane polygonale verticale à partir de ses sommets. On relève les sommets 60, 63, 76 et 75 et on saisit un ordre de terminaison de l'opération.

Pour modéliser ensuite le rampant sous toiture 55 par exemple, on saisit un ordre de démarrage d'une opération de modélisation d'une surface plane polygonale quelconque à partir de ses sommets. Le modèle de rampant créé suite à cette commande vient compléter le modèle du mur 52 précédemment créé. On sélectionne, dans le modèle numérique du mur 52, le segment généré par les points de mesure 60 et 63, à titre de segment appartenant également au modèle du rampant 55 en cours d'élaboration. Cette sélection revient à saisir des données de contrainte imposant deux sommets au modèle de rampant. On relève ensuite les deux sommets manquants 61 et 62 du rampant et on saisit un ordre de terminaison de l'opération de modélisation du rampant 55.

Pour modéliser ensuite le mur 51 par exemple, on saisit un ordre de démarrage d'une opération de modélisation d'une surface plane polygonale verticale à partir de ses arêtes. Le modèle de mur créé suite à cette commande vient compléter les modèles de mur 52 et de rampant 55 précédemment créés. On sélectionne le segment généré par les points de mesure 60 et 75 dans le modèle numérique du mur 52, et le segment généré par les points de mesure 60 et 61 dans le modèle numérique du rampant 55, à titre de segments appartenant également au modèle en cours d'élaboration. Cette sélection revient à saisir des données de contrainte imposant deux segments au modèle du mur 51. On relève ensuite les paires de points de mesure 61 et 67, 73 et 72, 74 et 75, et on saisit un ordre de terminaison de l'opération de modélisation du mur 51.

A noter que si l'unité de traitement est adaptée pour créer des modèles numériques en deux dimensions uniquement, le modèle consolidé est construit en accolant le modèle en cours d'élaboration à celui des modèles adjacents précédents dont le segment commun est sélectionnée en premier. Ainsi, si le segment 60-75 du modèle du mur 52 est sélectionné en premier à titre de segment imposé au modèle du mur 51, le modèle du mur 51 est accolé au modèle du mur 52 avec lequel il partage ce segment. La sélection postérieure du segment 60-61 dans le modèle du rampant 55 à titre de segment imposé au modèle du mur 51, entraîne la génération, dans le modèle consolidé, d'un nouveau segment représentant ce segment 60-61 (c'est-à-dire l'arête correspondante) pour le modèle du mur 51.

Il est à noter également que, dans le procédé précédant, les points de mesure 61 et 75 sont relevés deux fois. Cette redondance peut être évitée, par exemple en choisissant de modéliser le mur 51 à partir de ses sommets. Sélectionner le segment généré par les points de mesure 60 et 75 dans le modèle numérique du mur 52, et le segment généré par les points de mesure 60 et 61 dans le modèle numérique du rampant 55, à titre de segments appartenant également au modèle du mur 51 en cours d'élaboration, revient alors à saisir des données de contrainte générant trois sommets dans le modèle du mur 51. Reste ensuite à relever les deux sommets manquants pour terminer la modélisation.

On peut également éviter cette redondance, en définissant le segment 61-67 à partir du point de mesure 67 et de contraintes imposant la génération d'un segment à partir de ce seul point de mesure et la jonction du segment généré avec le segment 60-61 en son extrémité 61. Les manipulations correspondantes (saisie de données de contrainte...) s'avèrent toutefois plus longues que de relever de nouveau le point 61 ou tout autre point de mesure (distinct du point 67) sur l'arête correspondante pour générer le segment correspondant.

De façon générale, il est recommandé d'utiliser la même méthode de relevé (par sommets ou arêtes) pour chacune des surfaces modélisées dans le cadre d'une même session, ce afin de rendre machinales les opérations de relevé et éviter ainsi tout risque d'erreur. Une modélisation de la surface par ses sommets est préférée lorsqu'elle est possible (absence d'obstacle) en ce qu'elle limite le nombre de points de mesure à relever.

Lorsque toutes les surfaces sont modélisées, après avoir saisi l'ordre de terminaison de la dernière opération de modélisation, on saisit un ordre de terminaison de la session de modélisation.

L'unité de traitement est adaptée pour calculer l'aire de chacun des modèles créés et pour fournir ainsi une estimation de la superficie de chacune des surfaces planes polygonales mesurées. De préférence, elle est également adaptée pour calculer l'aire totale respectivement des modèles de surfaces de sols, des modèles de surfaces de murs, et des modèles de surfaces de plafonds (horizontaux et/ou inclinés).

Il va de soi que l'invention peut faire l'objet de nombreuses variantes par rapport aux modes de réalisation précédemment décrits et représentés sur les figures.

## Revendications

1. Procédé de mesure de la superficie de surfaces planes polygonales dans l'espace, dans lequel :
- on utilise un dispositif (1) comprenant :
◊ un télémètre (2), monté sur un piétement (4) par l'intermédiaire d'une monture (15) à point central (16) adaptée pour permettre à un utilisateur d'orienter le télémètre vers un point matériel d'une surface, dit point visé, de son choix, ledit télémètre étant adapté pour pouvoir délivrer un signal représentatif de la distance séparant le point central du point visé,
◊ des moyens (5, 6) de repérage angulaire dans l'espace de la direction, dite direction de visée, passant par le point central et le point visé, ces moyens de repérage angulaire étant adaptés pour pouvoir délivrer des signaux représentatifs de l'orientation de la direction de visée par rapport à un repère spatial centré sur le point central,
◇ le télémètre et les moyens de repérage angulaire étant ainsi adaptés pour pouvoir délivrer des signaux représentatifs des coordonnées sphériques du point visé par rapport audit repère spatial,
◊ des moyens de déclenchement (82), sur commande de l'utilisateur, de l'acquisition des coordonnées sphériques du point visé, aptes à déclencher une mémorisation de données numériques représentatives de ces coordonnées sphériques à partir des signaux délivrés par le télémètre et les moyens de repérage angulaire,
◊ une unité de traitement numérique (9), adaptée pour pouvoir modéliser des surfaces planes polygonales à partir des coordonnées sphériques acquises de points visés, dits points de mesure, qui permettent de déterminer topologiquement lesdites surfaces planes polygonales,
le procédé étant **caractérisé en ce que**, pour chaque surface plane polygonale à mesurer (13 ; 55) :
- on choisit une série de points de mesure (19-38 ; 60-63) permettant de déterminer topologiquement et individuellement ladite surface plane polygonale, laquelle série comprend au plus, pour chaque arête de la surface polygonale, deux points dont les projections sur ladite surface selon une direction prédéterminée appartiennent à ladite arête,
- on effectue une opération de modélisation de ladite surface, dans laquelle on relève les points de mesure de la série en orientant le télémètre successivement vers chaque point de mesure et en déclenchant l'acquisition de ses coordonnées sphériques, l'unité de traitement étant adaptée pour pouvoir :
◊ créer et mémoriser un modèle numérique géométrique de la surface plane polygonale en générant un segment ou une droite pour chaque arête de ladite surface à partir des coordonnées sphériques acquises de deux points de mesure de la série,
◊ calculer et enregistrer une valeur représentative de l'aire du modèle numérique ainsi créé.

2. Procédé selon la revendication 1, **caractérisé en ce que,** pour au moins une surface plane polygonale à mesurer (55), on choisit une série de points de mesure (60-63), dite série complète, qui détermine à elle seule la topologie de ladite surface plane polygonale.

3. Procédé selon la revendication 2, **caractérisé en ce que,** pour au moins une surface plane polygonale (55), on choisit une série de points de mesure (60-63) comprenant, pour chaque sommet de la surface polygonale, un point dont la projection sur ladite surface selon une direction prédéterminée coïncide avec ledit sommet.

4. Procédé selon la revendication 3, **caractérisé en ce que,** pour mesurer une surface plane polygonale horizontale d'une pièce de bâtiment, telle que sol ou plafond horizontal, on choisit une série de points de mesure comprenant, pour chaque sommet de la surface polygonale, un point dont la projection verticale sur ladite surface horizontale coïncide avec ledit sommet.

5. Procédé selon la revendication 2, **caractérisé en ce que,** pour au moins une surface plane polygonale (14), on choisit une série de points de mesure comprenant, pour chaque arête (47) de la surface polygonale, deux points (45, 46) dont les projections (48, 49) sur la surface selon une direction prédéterminée appartiennent à ladite arête et sont distinctes.

6. Procédé selon la revendication 5, **caractérisé en ce que,** pour mesurer une surface plane polygonale horizontale d'une pièce de bâtiment, telle que sol ou plafond horizontal, on choisit une série de points de mesure comprenant, pour chaque arête de la surface polygonale, deux points dont les projections verticales sur ladite surface horizontale appartiennent à ladite arête et sont distinctes.

7. Procédé selon la revendication 1, **caractérisé en ce que,** pour au moins une surface plane polygonale (13) à mesurer :
- on choisit d'une part une série de points de mesure (19-38), dite série réduite, et d'autre part une série de contraintes géométriques à imposer à un modèle numérique de la surface plane polygonale, parmi lesquelles au moins un objet géométrique (29, 32) à imposer audit modèle numérique et/ou au moins une relation géométrique à imposer entre des objets géométriques dudit modèle numérique, lesdites séries de points de mesure et de contraintes géométriques étant choisies de sorte que, en combinaison, elles déterminent la topologie de la surface plane polygonale,
- on effectue une opération de modélisation de ladite surface, dans laquelle on relève chaque point de mesure (19-38) de la série correspondante et on saisit, par l'intermédiaire d'une interface utilisateur graphique (12a, 12b), des données, dites données de contrainte, permettant de définir chaque contrainte géométrique de la série correspondante,
- l'unité de traitement étant adaptée pour :
◇ permettre à l'utilisateur de saisir de telles données de contrainte, et gérer lesdites données,
◇ créer un modèle numérique de la surface plane polygonale en générant des segments et/ou droites à partir des coordonnées sphériques acquises de la série réduite de points de mesure et des données de contrainte saisies de la série de contraintes.

8. Procédé selon la revendication 7, **caractérisé en ce qu'**on choisit une série réduite de points de mesure (19-38) comprenant, pour plusieurs des sommets de la surface polygonale, un point dont la projection sur ladite surface selon une direction prédéterminée coïncide avec ledit sommet.

9. Procédé selon la revendication 7, **caractérisé en ce qu'**on choisit une série réduite de points de mesure comprenant, pour plusieurs des arêtes de la surface polygonale, deux points dont les projections sur ladite surface selon une direction prédéterminée appartiennent à ladite arête et sont distinctes.

10. Procédé selon l'une des revendications 7 à 9, **caractérisé en ce qu'**on saisit au moins une donnée de contrainte générant un objet géométrique choisi parmi un point, un segment, un polygone.

11. Procédé selon l'une des revendications 7 à 10, **caractérisé en ce qu'**on saisit au moins une donnée de contrainte générant une relation géométrique choisie parmi un angle entre deux segments du modèle numérique, une orientation d'un segment, une longueur d'un segment, une jonction entre deux segments, un parallélisme de deux segments.

12. Procédé selon l'une des revendications 7 à 11, **caractérisé en ce qu'**on saisit au moins une donnée de contrainte générant un objet géométrique courbe, tel qu'un arc, l'unité de traitement (9) étant adaptée pour créer, à partir de telles données de contrainte, un modèle numérique plan non polygonal intégrant un(des) objet(s) géométrique(s) courbe(s) et pour calculer une valeur représentative de l'aire du modèle numérique ainsi créé.

13. Procédé selon l'une des revendications 1 à 12, **caractérisé en ce que** le télémètre (2) est orienté vers chaque point de mesure de façon manuelle.

14. Procédé selon l'une des revendications 1 à 13, **caractérisé en ce que** l'acquisition des coordonnées sphériques de chaque point de mesure est déclenchée de façon manuelle à l'instant de visée dudit point de mesure.

15. Procédé selon l'une des revendications 1 à 14,
**caractérisé en ce que** l'opération de modélisation d'une surface plane polygonale (13) comprend les étapes suivantes :
- on relève des points de mesure (20-24, 34, 35, 37, 38) de la série correspondante qui sont visibles depuis un premier point d'observation (A),
- on déplace le point central du dispositif en un deuxième point d'observation (B) duquel est visible au moins un autre point de mesure de ladite série, non visible depuis le premier point d'observation,
- on relève des points (90, 91), dits points de recalage, depuis le deuxième point d'observation, lesdits points de recalage étant choisis de façon à permettre de déterminer la position du deuxième point d'observation relativement au premier point d'observation,
- on relève le(s) point(s) de mesure (25-28, 19, 30, 31, 33, 34, 36, 37) visible(s) depuis le deuxième point d'observation, l'unité de traitement étant adaptée pour calculer les coordonnées, dans le repère spatial du premier point d'observation, du deuxième point d'observation et du(des) point(s) de mesure relevé(s) depuis celui-ci.

16. Procédé selon l'une des revendications 1 à 15, **caractérisé en ce que** l'opération de modélisation de chaque surface plane polygonale comprend une saisie initiale d'un ordre de démarrage de ladite opération et une saisie finale d'un ordre de terminaison de ladite opération, à l'aide d'une interface utilisateur du dispositif.

17. Procédé selon l'une des revendications 1 à 16, **caractérisé en ce qu'**on choisit un type de série de points de mesure et on saisit, au démarrage de l'opération de modélisation, une information définissant le type de série choisi.

18. Procédé selon l'une des revendications 1 à 17 pour mesurer une pluralité de surfaces planes polygonales (50-56) dont on souhaite réaliser un modèle numérique, dit modèle consolidé, regroupant les modèles numériques desdites surfaces, **caractérisé en ce que** l'on saisit un ordre de démarrage d'une session de modélisation préalablement à une première opération de modélisation d'une surface, et on saisit un ordre de terminaison de ladite session après la fin d'une dernière opération de modélisation d'une surface.

19. Dispositif de mesure de la superficie de surfaces planes polygonales dans l'espace, comprenant :
- un télémètre (2), monté sur un piétement (4) par l'intermédiaire d'une monture (15) à point central (16) adaptée pour permettre à un utilisateur d'orienter le télémètre vers un point matériel d'une surface, dit point visé, de son choix, ledit télémètre étant adapté pour pouvoir délivrer un signal représentatif de la distance séparant le point central du point visé,
- des moyens (5, 6) de repérage angulaire dans l'espace de la direction, dite direction de visée, passant par le point central et le point visé, ces moyens de repérage angulaire étant adaptés pour pouvoir délivrer des signaux représentatifs de l'orientation de la direction de visée par rapport à un repère spatial centré sur le point central,
- le télémètre et les moyens de repérage angulaire étant ainsi adaptés pour pouvoir délivrer des signaux représentatifs des coordonnées sphériques du point visé par rapport audit repère spatial,
- des moyens de déclenchement (82), sur commande de l'utilisateur, de l'acquisition des coordonnées sphériques du point visé, aptes à déclencher une mémorisation de données numériques représentatives de ces coordonnées sphériques à partir des signaux délivrés par le télémètre (2) et les moyens de repérage angulaire (5, 6),
- une unité de traitement numérique (9), adaptée pour pouvoir modéliser des surfaces planes polygonales à partir des coordonnées sphériques acquises de points visés, dits points de mesure, qui permettent de déterminer topologiquement lesdites surfaces planes polygonales,
**caractérisé en ce que** l'unité de traitement est adaptée pour pouvoir :
- créer et mémoriser un modèle numérique géométrique de chaque surface plane polygonale (13 ; 55), à partir d'une série de points de mesure (19-38 ; 60-63) qui permet de déterminer topologiquement et individuellement ladite surface et comprend au plus, pour chaque arête de la surface plane polygonale, deux points dont les projections sur ladite surface selon une direction prédéterminée appartiennent à ladite arête, en générant un segment ou une droite pour chaque arête de ladite surface à partir des coordonnées sphériques acquises de deux points de mesure de la série,
- calculer et enregistrer une valeur représentative de l'aire de chaque modèle numérique ainsi créé.

20. Dispositif selon la revendication 19, **caractérisé en ce que** l'unité de traitement (9) est adaptée pour créer un modèle numérique d'une surface plane polygonale (55) à partir des coordonnées sphériques acquises d'une série de points de mesure (60-63), dite série complète, qui détermine à elle seule la topologie de la surface plane polygonale.

21. Dispositif selon la revendication 20, **caractérisé en ce que** l'unité de traitement (9) est adaptée pour créer un modèle numérique d'une surface plane polygonale (55) à partir d'une série de points de mesure comprenant, pour chaque sommet de la surface polygonale, un point (60-63) dont la projection sur la surface selon une direction prédéterminée coïncide avec ledit sommet.

22. Dispositif selon la revendication 21 destiné à être utilisé pour mesurer la superficie de surfaces délimitant une pièce de bâtiment, **caractérisé en ce que** l'unité de traitement (9) est adaptée pour créer un modèle numérique d'une surface plane polygonale horizontale, telle que sol ou plafond horizontal, à partir d'une série de points de mesure comprenant, pour chaque sommet de la surface polygonale, un point dont la projection verticale sur ladite surface horizontale coïncide avec ledit sommet.

23. Dispositif selon la revendication 20, **caractérisé en ce que** l'unité de traitement (9) est adaptée pour créer un modèle numérique d'une surface plane polygonale (14 ; 54) à partir d'une série de points de mesure comprenant, pour chaque arête de la surface polygonale, deux points (45, 46, ... ; 65, 66, 68-73) dont les projections sur la surface selon une direction prédéterminée appartiennent à ladite arête et sont distinctes.

24. Dispositif selon la revendication 23 destiné à être utilisé pour mesurer la superficie de surfaces délimitant une pièce de bâtiment, **caractérisé en ce que** l'unité de traitement (9) est adaptée pour créer un modèle numérique d'une surface plane polygonale horizontale (14), telle que sol ou plafond horizontal, à partir d'une série de points de mesure comprenant, pour chaque arête (47) de la surface polygonale, deux points (45, 46) dont les projections verticales (48, 49) sur ladite surface horizontale appartiennent à ladite arête et sont distinctes.

25. Dispositif selon l'une des revendications 19 à 24, **caractérisé en ce que** l'unité de traitement (9) est adaptée pour :
- permettre à l'utilisateur, par l'intermédiaire d'une interface utilisateur graphique (12a, 12b), de saisir des données, dites données de contrainte, permettant de définir des contraintes géométriques à imposer à un modèle numérique, parmi lesquelles des données permettant de générer des objets géométriques dans le modèle numérique et des données permettant de générer des relations géométriques entre des objets géométriques du modèle numérique,
- gérer des données de contrainte saisies de façon à pouvoir créer un modèle numérique d'une surface plane polygonale (13) en générant des segments et/ou droites à partir des coordonnées sphériques acquises d'une série de points de mesure (19-38), dite série réduite, et des données de contrainte saisies d'une série de contraintes géométriques, lesdites séries de points de mesure et de contraintes permettant, en combinaison, de déterminer la topologie de la surface plane polygonale.

26. Dispositif selon la revendication 25, **caractérisé en ce que** l'unité de traitement (9) est adaptée pour permettre à l'utilisateur de saisir des données de contrainte générant des objets géométriques choisis parmi un point, un segment, un polygone.

27. Dispositif selon l'une des revendications 25 ou 26, **caractérisé en ce que** l'unité de traitement (9) est adaptée pour permettre à l'utilisateur de saisir des données de contrainte générant des relations géométriques choisies parmi un angle entre deux segments du modèle numérique, une orientation d'un segment, une longueur d'un segment, une jonction entre deux segments, un parallélisme de deux segments.

28. Dispositif selon les revendications 25 à 27, **caractérisé en ce que** l'unité de traitement (9) est adaptée pour :
- permettre à l'utilisateur de saisir des données de contrainte générant des objets géométriques courbes, tels qu'un arc,
- créer, à partir de telles données de contrainte, un modèle numérique plan non polygonal intégrant un(des) objet(s) géométrique(s) courbe(s),
- calculer une valeur représentative de l'aire du modèle numérique ainsi créé.

29. Dispositif selon les revendications 25 à 28**, caractérisé en ce que** l'unité de traitement (9) est adaptée pour gérer des contraintes non orientées, selon une approche variationnelle.

30. Dispositif selon l'une des revendications 19 à 29, **caractérisé en ce que** l'unité de traitement (9) est adaptée pour créer des modèles numériques géométriques en deux dimensions.

31. Dispositif selon l'une des revendications 19 à 30, **caractérisé en ce que** l'unité de traitement (9) est adaptée pour créer des modèles numériques géométriques en trois dimensions.

32. Dispositif selon les revendications 19 à 31, **caractérisé en ce que** l'unité de traitement (9) est adaptée pour créer un modèle, dit modèle consolidé, regroupant une pluralité de modèles numériques correspondant chacun à une surface plane polygonale.

33. Dispositif selon l'une des revendications 19 à 32, **caractérisé en ce que** l'unité de traitement (9) est adaptée pour calculer et enregistrer une valeur représentative de la longueur de chaque segment d'un modèle numérique créé, et une valeur représentative de la longueur du périmètre du modèle numérique.

34. Dispositif selon l'une des revendications 19 à 33, **caractérisé en ce que** la monture (15) comprend des moyens de manoeuvre (7, 8) du télémètre adaptés pour permettre une orientation manuelle de celui-ci par l'utilisateur.

35. Dispositif selon l'une des revendications 19 à 34, **caractérisé en ce que** les moyens de déclenchement comprennent un organe de déclenchement (82) manuel à effet immédiat.

36. Dispositif selon l'une des revendications 19 à 35, **caractérisé en ce que** les moyens de repérage angulaire comprennent deux codeurs angulaires (5, 6).

## Claims

1. A method for measuring the area of polygonal planar surfaces in space, wherein
- a device (1) is used comprising:
• a range finder (2) mounted on a leg support (4) by means of a frame (15) having a central point (16) and being suitable for allowing a user to orient the range finder toward a material point of a surface, known as the targeted point, of his choice, said range finder being suitable for being able to deliver a signal representing the distance separating the central point from the targeted point,
• means (5, 6) for the angular tracking in space of the direction, known as the viewing direction, passing through the central point and the targeted point, these angular tracking means being suitable for being able to deliver signals representing the orientation of the viewing direction relative to a spatial reference frame centred on the central point,
• the range finder and the angular tracking means thus being suitable for being able to deliver signals representing the spherical coordinates of the targeted point relative to said spatial reference frame,
• means (82) for triggering, at the user's command, the acquisition of the spherical coordinates of the targeted point, which means are capable of triggering the storing of digital data representing the spherical coordinates from the signals delivered by the range finder and the angular tracking means,
• a digital processing unit (9), suitable for being able to model polygonal planar surfaces from the acquired spherical coordinates of targeted points, known as measuring points, which allow said polygonal planar surfaces to be determined topologically, the method being **characterized in that**, for each polygonal planar surface to be measured (13; 55):
- a series of measuring points (19 - 38; 60 - 63) is selected allowing said polygonal planar surface to be determined topologically and individually, which series comprises, for each edge of the polygonal surface, at most two points, the projections of which on said surface in a predetermined direction pertain to said edge,
- said surface is subjected to a modelling process in which the measuring points of the series are plotted by orienting the range finder successively toward each measuring point and by triggering the acquisition of its spherical coordinates, the processing unit being suitable for being able to:
• produce and store a geometric digital model of the polygonal planar surface by generating a segment or a straight line for each edge of said surface from the acquired spherical coordinates of at most two measuring points,
• calculate and record a value representing the surface area of the digital model thus produced.

2. A method according to claim 1, **characterized in that,** for at least one polygonal planar surface to be measured (55), a series of measuring points (60 - 63), known as a complete series, is selected which determines on its own the topology of said polygonal planar surface.

3. A method according to claim 2, **characterized in that,** for at least one polygonal planar surface (55), a series of measuring points (60 - 63) is selected comprising, for each peak of the polygonal surface, a point, the projection of which on said surface in a predetermined direction coincides with said peak.

4. A method according to claim 3, **characterized in that,** for measuring a horizontal polygonal planar surface of a room, such as a horizontal floor or ceiling, a series of measuring points is selected comprising for each peak of the polygonal surface, a point, the vertical projection of which on said horizontal surface coincides with said peak.

5. A method according to claim 2, **characterized in that,** for at least one polygonal planar surface (14), a series of measuring points is selected comprising, for each edge (47) of the polygonal surface, two points (45, 46), the projections (48, 49) of which on the surface in a predetermined direction pertain to said edge and are separate.

6. A method according to claim 5, **characterized in that,** for measuring a horizontal polygonal planar surface of a room, such as a horizontal floor or ceiling, a series of measuring points is selected comprising, for each edge of the polygonal surface, two points, the vertical projections of which on said horizontal surface pertain to said edge and are separate.

7. A method according to claim 1**, characterized in that,** for at least one polygonal planar surface (13) to be measured:
- on the one hand, a series of measuring points (19 - 38), known as a reduced series, and, on the other hand, a series of geometric constraints to be imposed on a digital model of the polygonal planar surface, including at least one geometric object (29, 32) to be imposed on said digital model and/or at least one geometric relationship to be imposed between geometric objects of said digital model, are selected, said series of measuring points and geometric constraints being selected in such a way that, in combination, they determine the topology of the polygonal planar surface,
- said surface is subjected to a modelling process in which each measuring point (19 - 38) of the corresponding series is plotted and data, known as constraint data, allowing each geometric constraint of the corresponding series to be defined, are input by means of a graphic user interface (12a, 12b),
- the processing unit being suitable for:
• allowing the user to input such constraint data and to manage said data,
• producing a digital model of the polygonal planar surface by generating segments and/or straight lines from the acquired spherical coordinates of the reduced series of measuring points and from the input constraint data of the series of constraints.

8. A method according to claim 7, **characterized in that** a reduced series of measuring points (19 - 38) is selected comprising, for a plurality of the peaks of the polygonal surface, a point, the projection of which on said surface in a predetermined direction coincides with said peak.

9. A method according to claim 7, **characterized in that** a reduced series of measuring points is selected comprising, for a plurality of the edges of the polygonal surface, two points, the projections of which on said surface in a predetermined direction pertain to said edge and are separate.

10. A method according to any one of claims 7 to 9,
**characterized in that** at least one item of constraint data is input generating a geometric object selected from a point, a segment and a polygon.

11. A method according to any one of claims 7 to 10,
**characterized in that** at least one item of constraint data is input generating a geometric relationship selected from an angle between two segments of the digital model, an orientation of a segment, a length of a segment, a junction between two segments and a parallel arrangement of two segments.

12. A method according to any one of claims 7 to 11,
**characterized in that** at least one item of constraint data is input generating a curved geometric object, such as an arc, the processing unit (9) being suitable for producing, from such constraint data, a non-polygonal planar digital model integrating a/some curved geometric object/s and for calculating a value representing the surface area of the digital model thus produced.

13. A method according to any one of claims 1 to 12,
**characterized in that** the range finder (2) is manually oriented toward each measuring point.

14. A method according to any one of claims 1 to 13,
**characterized in that** the acquisition of the spherical coordinates of each measuring point is manually triggered at the viewing moment of said measuring point.

15. A method according to any one of claims 1 to 14,
**characterized in that** the process of modelling a polygonal planar surface (13) includes the following steps:
- measuring points (20 - 24, 34, 35, 37, 38) of the corresponding series, which are visible from a first observation point (A), are plotted,
- the central point of the device is moved to a second observation point (B) from which at least one other measuring point of said series, which is not visible from the first observation point, is visible,
- points (90, 91), known as resetting points, are plotted from the second observation point, said resetting points being selected so as to allow the position of the second observation point to be determined relative to the first observation point,
- the measuring point(s) (25 - 28, 19, 30, 31, 33, 34, 36, 37) which is/are visible from the second observation point is/are plotted, the processing unit being suitable for calculating the coordinates, in the spatial reference frame of the first observation point, of the second observation point and of the measuring point(s) plotted therefrom.

16. A method according to any one of claims 1 to 15,
**characterized in that** the process of modelling each polygonal planar surface includes an initial input of an order to start said process and a final input of an order to terminate said process, with the aid of a user interface of the device.

17. A method according to any one of claims 1 to 16,
**characterized in that** a type of series of measuring points is selected and an item of data defining the selected series type is input at the start of the modelling process.

18. A method according to any one of claims 1 to 17 for measuring a plurality of polygonal planar surfaces (50 - 56) of which it is desired to produce a digital model, known as a consolidated model, encompassing the digital models of said surfaces, **characterized in that** an order to start a modelling session is input prior to a first surface modelling process and an order to terminate said session is input after the end of a final surface modelling process.

19. A device for measuring the area of polygonal planar surfaces in space, comprising:
- a range finder (2) mounted on a leg support (4) by means of a frame (15) having a central point (16) and being suitable for allowing a user to orient the range finder toward a material point of a surface, known as the targeted point, of his choice, said range finder being suitable for being able to deliver a signal representing the distance separating the central point from the targeted point,
- means (5, 6) for the angular tracking in space of the direction, known as the viewing direction, passing through the central point and the targeted point, these angular tracking means being suitable for being able to deliver signals representing the orientation of the viewing direction relative to a spatial reference frame centred on the central point,
- the range finder and the angular tracking means thus being suitable for being able to deliver signals representing the spherical coordinates of the targeted point relative to said spatial reference frame,
- means (82) for triggering, at the user's command, the acquisition of the spherical coordinates of the targeted point, which means are capable of triggering the storing of digital data representing these spherical coordinates from the signals delivered by the range finder (2) and the angular tracking means (5, 6),
- a digital processing unit (9), suitable for being able to model polygonal planar surfaces from the acquired spherical coordinates of targeted points, known as measuring points, which allow said polygonal planar surfaces to be determined topologically,
**characterized in that** the processing unit is suitable for being able to:
- produce and store a geometric digital model of each polygonal planar surface (13; 55) from a series of measuring points (19 - 38; 60 - 63) which allows said surface to be determined topologically and individually and comprises, for each edge of the polygonal planar surface, at most two points, the projections of which on said surface in a predetermined direction pertain to said edge, by generating a segment or a straight line for each edge of said surface from the acquired spherical coordinates of at most two measuring points of the series,
- calculate and record a value representing the surface area of each digital model thus produced.

20. A device according to claim 19, **characterized in that** the processing unit (9) is suitable for producing a digital model of a polygonal planar surface (55) from the acquired spherical coordinates of a series of measuring points (60 - 63), known as a complete series, which determines on its own the topology of the polygonal planar surface.

21. A device according to claim 20, **characterized in that** the processing unit (9) is suitable for producing a digital model of a polygonal planar surface (55) from a series of measuring points comprising, for each peak of the polygonal surface, a point (60 - 63), the projection of which on the surface in a predetermined direction coincides with said peak.

22. A device according to claim 21, intended to be used for measuring the area of surfaces delimiting a room,
**characterized in that** the processing unit (9) is suitable for producing a digital model of a horizontal polygonal planar surface, such as a horizontal floor or ceiling, from a series of measuring points comprising, for each peak of the polygonal surface, a point, the vertical projection of which on said horizontal surface coincides with said peak.

23. A device according to claim 20, **characterized in that** the processing unit (9) is suitable for producing a digital model of a polygonal planar surface (14; 54) from a series of measuring points comprising, for each edge of the polygonal surface, two points (45, 46 ...; 65, 66, 68 - 73), the projections of which on the surface in a predetermined direction pertain to said edge and are separate.

24. A device according to claim 23, intended to be used for measuring the area of surfaces delimiting a room,
**characterized in that** the processing unit (9) is suitable for producing a digital model of a horizontal polygonal planar surface (14), such as a horizontal floor or ceiling, from a series of measuring points comprising, for each edge (47) of the polygonal surface, two points (45, 46), the vertical projections (48, 49) of which on said horizontal surface pertain to said edge and are separate.

25. A device according to any one of claims 19 to 24,
**characterized in that** the processing unit (9) is suitable for:
- allowing the user, by means of a graphic user interface (12a, 12b), to input data, known as constraint data, allowing definition of geometric constraints to be imposed on a digital model, including data allowing generation of geometric objects in the digital model and data allowing generation of geometric relationships between geometric objects of the digital model,
- managing input constraint data so as to allow the production of a digital model of a polygonal planar surface (13) by generating segments and/or straight lines from the acquired spherical coordinates of a series of measuring points (19 - 38), known as a reduced series, and from the input constraint data of a series of geometric constraints, said series of measuring points and constraints allowing, in combination, the topology of the polygonal planar surface to be determined.

26. A device according to claim 25, **characterized in that** the processing unit (9) is suitable for allowing the user to input constraint data generating geometric objects selected from a point, a segment and a polygon.

27. A device according to either claim 25 or claim 26, **characterized in that** the processing unit (9) is suitable for allowing the user to input constraint data generating geometric relationships selected from an angle between two segments of the digital model, an orientation of a segment, a length of a segment, a junction between two segments and a parallel arrangement of two segments.

28. A device according to claims 25 to 27, **characterized in that** the processing unit (9) is suitable for:
- allowing the user to input constraint data generating curved geometric objects, such as an arc,
- producing, from such constraint data, a non-polygonal planar digital model integrating a/some curved geometric object/s,
- calculating a value representing the surface area of the digital model thus produced.

29. A device according to claims 25 to 28, **characterized in that** the processing unit (9) is suitable for managing non-oriented constraints, using a variational approach.

30. A device according to any one of claims 19 to 29,
**characterized in that** the processing unit (9) is suitable for producing two-dimensional geometric digital models.

31. A device according to any one of claims 19 to 30,
**characterized in that** the processing unit (9) is suitable for producing three-dimensional geometric digital models.

32. A device according to claims 19 to 31, **characterized in that** the processing unit (9) is suitable for producing a model, known as a consolidated model, encompassing a plurality of digital models, each corresponding to a polygonal planar surface.

33. A device according to any one of claims 19 to 32,
**characterized in that** the processing unit (9) is suitable for calculating and recording a value representing the length of each segment of a digital model produced and a value representing the length of the perimeter of the digital model.

34. A device according to any one of claims 19 to 33,
**characterized in that** the frame (15) comprises means (7, 8) for manoeuvring the range finder, which means are suitable for allowing said range finder to be manually oriented by the user.

35. A device according to any one of claims 19 to 34,
**characterized in that** the triggering means comprise a manual triggering member (82) having immediate effect.

36. A device according to any one of claims 19 to 35,
**characterized in that** the angular tracking means comprise two angle encoders (5, 6).

## Patentansprüche

1. Verfahren zur Messung der Fläche von ebenen, polygonalen Oberflächen im Raum, in dem:
- eine Vorrichtung (1) verwendet wird, die Folgendes umfasst:
* ein Telemeter (2), das auf einem Gestell (4) über einen Zusammenbau (15) mit zentralem Punkt (16) angebracht ist, das angepasst ist, um einem Nutzer die Ausrichtung des Telemeters auf einen materiellen Punkt einer Oberfläche, bezeichnet als anvisierter Punkt, seiner Wahl zu erlauben, wobei das genannte Telemeter angepasst ist, um ein Signal auszugeben, das die Entfernung darstellt, die den zentralen Punkt von dem anvisierten Punkt trennt,
* Mittel (5, 6) zur winkelförmigen Kennzeichnung im Raum der Richtung, bezeichnet als anvisierte Richtung, die durch den zentralen Punkt und den anvisierten Punkt hindurch tritt, wobei diese Mittel zur winkelförmigen Kennzeichnung angepasst sind, um Signale ausgeben zu können, die die Ausrichtung der anvisierten Richtung im Verhältnis zu einer räumlichen Markierung darstellen, die auf dem zentralen Punkt zentriert ist,
* wobei das Telemeter und die winkelförmigen Kennzeichnungsmittel so angepasst sind, um Signale ausgeben zu können, die sphärische Koordinaten des anvisierten Punkts im Verhältnis zu der genannten räumlichen Markierung darstellen.
* Mittel zum Auslösen (82) der Erfassung der sphärischen Koordinaten des anvisierten Punktes auf Befehl des Nutzers, die geeignet sind, eine Speicherung von digitalen Daten auszulösen, die diese sphärischen Koordinaten ausgehend von den durch das Telemeter ausgegebenen Daten und den Mitteln zur winkelförmigen Kennzeichnung darstellen,
* eine Einheit zur digitalen Verarbeitung (9), die angepasst ist, um ebene, polygonale Oberflächen ausgehend von den erfassten sphärischen Koordinaten von anvisierten Punkten, bezeichnet als Messpunkte, die die topologische Bestimmung der genannten ebenen, polygonalen Oberflächen erlauben, als Modell darstellen zu können,
wobei das Verfahren **dadurch gekennzeichnet ist, dass** für jede ebene, polygonale, zu messende Oberfläche (13; 55):
- eine Serie von Messpunkten (19-38; 60-63) gewählt wird, die die topologische und individuelle Bestimmung der genannten ebenen, polygonalen Oberfläche erlaubt, wobei die genannte Serie darüber hinaus für jede Kante der polygonalen Oberfläche zwei Punkte umfasst, deren Projektion auf der genannten Oberfläche gemäß einer vorbestimmten Richtung zu der genannten Kante gehören,
- eine Operation der Darstellung als Modell der genannten Oberfläche durchgeführt wird, in der Messpunkte der Serie unter Ausrichtung des Telemeters sukzessive zu jedem Messpunkt und unter Auslösen der Erfassung seiner sphärischen Koordinaten erfasst werden, wobei die Verarbeitungseinheit angepasst ist, um Folgendes zu können:
* ein digitales, geometrisches Modell der ebenen, polygonalen Oberfläche unter Generieren eines Segments oder einer geraden Linie für jede Kante der genannten Oberfläche ausgehend von sphärischen Koordinaten zu erstellen und zu speichern, die aus zwei Messpunkten der genannten Serie erfasst worden sind,
* einen Wert zu berechnen und zu speichern, der die auf diese Weise geschaffene digitale Grundfläche darstellt.

2. Verfahren gemäß Anspruch 1, **dadurch gekennzeichnet, dass** für wenigstens eine zu messende, ebene, polygonale Oberfläche (55) eine Serie von Messpunkten (60-63), bezeichnet als vollständige Serie, gewählt wird, die ganz allein die Topologie der genannten ebenen, polygonalen Oberfläche bestimmt.

3. Verfahren gemäß Anspruch 2, **dadurch gekennzeichnet, dass** für wenigstens eine ebene, polygonale Oberfläche (55) eine Serie von Messpunkten (60-63) gewählt wird, die für jeden höchsten Punkt der polygonalen Oberfläche einen Punkt umfasst, dessen Projektion auf der genannten Oberfläche gemäß einer vorbestimmten Richtung mit dem genannten höchsten Punkt zusammenfällt.

4. Verfahren gemäß Anspruch 3, **dadurch gekennzeichnet, dass** zur Messung einer ebenen, polygonalen, horizontalen Oberfläche eines Gebäudeteils, wie z. B. einem Boden oder einer horizontalen Decke, eine Serie von Messpunkten gewählt wird, die für jeden höchsten Punkt der polygonalen Oberfläche einen Punkt umfasst, dessen vertikale Projektion auf der genannten horizontalen Oberfläche mit dem genannten höchsten Punkt zusammenfällt.

5. Verfahren gemäß Anspruch 2, **dadurch gekennzeichnet, dass** für wenigstens eine ebene, polygonale Oberfläche (14) eine Serie von Messpunkten gewählt wird, die für jede Kante (47) der polygonalen Oberfläche zwei Punkte (45, 46) umfassen, deren Projektionen (48, 49) auf der Oberfläche gemäß einer vorbestimmten Richtung zu der genannten Kante gehören und unterschiedlich sind.

6. Verfahren gemäß Anspruch 5, **dadurch gekennzeichnet, dass** zum Messen einer ebenen, polygonalen, horizontalen Oberfläche eines Gebäudeteils, wie z. B. einem Boden oder einer horizontalen Decke eine Serie von Messpunkten gewählt wird, die für jede Kante der polygonalen Oberfläche zwei Punkte umfassen, deren vertikale Projektionen auf der genannten horizontalen Oberfläche zu der genannten Kante gehören und unterschiedlich sind.

7. Verfahren gemäß Anspruch 1, **dadurch gekennzeichnet, dass** für wenigstens eine zu messende, ebene, polygonale Oberfläche (13):
- einerseits eine Serie von Messpunkten (19-38), bezeichnet als reduzierte Serie, und andererseits eine Serie von geometrischen Vorgaben gewählt wird, die einem digitalen Modell der ebenen, polygonalen Oberfläche zugewiesen werden, von denen wenigstens ein geometrisches Objekt (29, 32) dem genannten digitalen Modell zugewiesen wird und / oder wenigstens einem geometrischen Verhältnis zwischen geometrischen Objekten des genannten digitalen Modells zugewiesen wird,
wobei die genannten Serien von Messpunkten und geometrischen Vorgaben derart gewählt werden, dass sie in Kombination die Topologie der ebenen, polygonalen Oberfläche bestimmen.
- eine Operation zur Darstellung als Modell der genannten Oberfläche durchgeführt wird, in der jeder Messpunkt (19-38) der entsprechenden Serie erfasst wird und über eine graphische Nutzerschnittfläche (12a, 12b) Daten, bezeichnet als Vorgabedaten, die Definition jeder geometrischen Vorgabe der entsprechenden Serie erlauben,
- wobei die Verarbeitungseinheit angepasst ist, um:
* dem Nutzer die Eingabe derartiger Vorgabedaten und die Verwaltung der genannten Daten zu erlauben,
* ein digitales Modell der ebenen, polygonalen Oberfläche zu erstellen, indem Segmente und / oder gerade Linien ausgehend von den sphärischen Koordinaten generiert werden, die aus der reduzierten Serie von Messpunkten und Vorgabedaten erfasst werden, die aus der Vorgabeserie eingegeben wurden.

8. Verfahren gemäß Anspruch 7, **dadurch gekennzeichnet, dass** eine reduzierte Serie von Messpunkten (19-38) gewählt wird, die für mehrere höchste Punkte der polygonalen Oberfläche einen Punkt umfassen, dessen Projektion auf die genannte Oberfläche gemäß einer vorbestimmten Richtung mit dem genannten höchsten Punkt zusammenfällt.

9. Verfahren gemäß Anspruch 7, **dadurch gekennzeichnet, dass** eine reduzierte Serie von Messpunkten gewählt wird, die für mehrere Kanten der polygonalen Oberfläche zwei Punkte umfassen, von denen die Projektionen auf der genannten Oberfläche gemäß einer vorbestimmten Richtung zu der genannten Kante gehören und unterschiedlich sind.

10. Verfahren gemäß Anspruch 7 bis 9, **dadurch gekennzeichnet, dass** wenigstens eine Vorgabeangabe eingegeben wird, die ein geometrisches Objekt generiert, das aus einem Punkt, einem Segment, einem Polygon gewählt ist.

11. Verfahren gemäß Anspruch 7 bis 10, **dadurch gekennzeichnet, dass** wenigstens eine Vorgabeangabe eingegeben wird, die ein geometrisches Verhältnis generiert, das aus einem Winkel zwischen zwei Segmenten des digitalen Modells, einer Ausrichtung eines Segments, einer Länge eines Segments, einer Verbindung zwischen zwei Segmenten, einer Parallelität von zwei Segmenten gewählt ist.

12. Verfahren gemäß Anspruch 7 bis 11, **dadurch gekennzeichnet, dass** wenigstens eine Vorgabeangabe eingegeben wird, die ein gekrümmtes geometrisches Objekt generiert, wie z. B. einen Bogen, wobei die Verarbeitungseinheit (9) angepasst ist, um ausgehend von derartigen Vorgabeangaben ein digitales, ebenes, nicht polygonales Modell zu schaffen, das ein(es) (der) gekrümmtes / gekrümmten, geometrisches / geometrischen Objekt(e) integriert, und um einen Wert zu berechnen, der die Grundfläche des damit geschaffenen digitalen Modells darstellt.

13. Verfahren gemäß Anspruch 1 bis 12, **dadurch gekennzeichnet, dass** das Telemeter (2) auf manuelle Weise zu jedem Messpunkt ausgerichtet wird.

14. Verfahren gemäß Anspruch 1 bis 13, **dadurch gekennzeichnet, dass** die Erfassung der sphärischen Koordinaten jedes Messpunktes auf manuelle Weise zum Zeitpunkt des Anvisierens des genannten Messpunktes ausgelöst wird.

15. Verfahren gemäß Anspruch 1 bis 14, **dadurch gekennzeichnet, dass** die Operation zur Darstellung als Modell einer ebenen, polygonalen Fläche (13) die folgenden Stufen umfasst:
- Es werden Messpunkte (20-24, 34, 35, 37, 38) der entsprechenden Serie, die ab einem ersten Beobachtungspunkt (A) sichtbar sind, erfasst,
- Der zentrale Punkt der Vorrichtung wird in einen zweiten Beobachtungspunkt (B) verschoben, von dem aus wenigstens ein anderer Messpunkt der genannten Serie sichtbar ist, der ab dem ersten Beobachtungspunkt nicht sichtbar ist,
- Es werden Punkte (90, 91), bezeichnet als Wegmarken, ab dem zweiten Beobachtungspunkt erfasst, wobei die genannten Wegmarken derart gewählt sind, dass sie die Bestimmung der Position des zweiten Beobachtungspunktes relativ zum ersten Beobachtungspunkt erlauben.
- Es werden der / die Messpunkt (e) (25-28, 19, 30, 31, 33, 34, 36, 37) erfasst, die ab dem zweiten Beobachtungspunkt sichtbar ist / sind, wobei die Verarbeitungseinheit angepasst ist, um die Koordinaten in der räumlichen Markierung des ersten Beobachtungspunktes, des zweiten Beobachtungspunktes und des / der ab diesem erfassten Messpunkt(en) zu berechnen.

16. Verfahren gemäß Anspruch 1 bis 15, **dadurch gekennzeichnet, dass** die Operation der Darstellung als Modell jeder ebenen, polygonalen Fläche eine anfängliche Eingabe einer Anlaufreihenfolge der genannten Operation und eine endgültige Eingabe einer Beendigungsreihenfolge der genannten Operation mithilfe einer Nutzerschnittstelle der Vorrichtung umfasst.

17. Verfahren gemäß Anspruch 1 bis 16, **dadurch gekennzeichnet, dass** ein Serientyp von Messpunkten gewählt wird und beim Anlaufen der Operation zur Darstellung als Modell eine Information eingegeben wird, die den gewählten Serientyp definiert.

18. Verfahren gemäß Anspruch 1 bis 17 zur Messung einer Vielzahl von ebenen, polygonalen Oberflächen (50-56), von denen ein digitales Modell realisiert werden soll, bezeichnet als konsolidiertes Modell, das die digitalen Modelle der genannten Oberflächen zusammenfasst, **dadurch gekennzeichnet, dass** eine Anlaufreihenfolge einer Sitzung zur Darstellung als Modell vor einer ersten Operation der Darstellung einer Oberfläche als Modell eingegeben wird und eine Beendigungsreihenfolge der genannten Sitzung nach dem Ende einer letzten Operation zur Darstellung einer Oberfläche als Modell eingegeben wird.

19. Vorrichtung zur Messung der Fläche von ebenen, polygonalen Oberflächen im Raum, die Folgendes umfasst:
- ein Telemeter (2), das auf einem Gestell (4) über einen Zusammenbau (15) mit zentralem Punkt (16) angebracht ist, das angepasst ist, um einem Nutzer die Ausrichtung des Telemeters auf einen materiellen Punkt einer Oberfläche, bezeichnet als anvisierter Punkt, seiner Wahl zu erlauben, wobei das genannte Telemeter angepasst ist, um ein Signal auszugeben, das die Entfernung darstellt, die den zentralen Punkt von dem anvisierten Punkt trennt,
- Mittel (5, 6) zur winkelförmigen Kennzeichnung im Raum der Richtung, bezeichnet als anvisierte Richtung, die durch den zentralen Punkt und den anvisierten Punkt hindurch tritt,
wobei diese Mittel zur winkelförmigen Kennzeichnung angepasst sind, um Signale ausgeben zu können, die die Ausrichtung der anvisierten Richtung im Verhältnis zu einer räumlichen Markierung darstellen, die auf dem zentralen Punkt zentriert ist,
- wobei das Telemeter und die winkelförmigen Kennzeichnungsmittel damit angepasst sind, um Signale ausgeben zu können, die sphärische Koordinaten des anvisierten Punkts im Verhältnis zu der genannten räumlichen Markierung darstellen.
- Mittel zum Auslösen (82) der Erfassung der sphärischen Koordinaten des anvisierten Punktes auf Befehl des Nutzers, die geeignet sind, eine Speicherung von digitalen Daten auszulösen, die diese sphärischen Koordinaten ausgehend von den durch das Telemeter (2) ausgegebenen Daten und den Mitteln zur winkelförmigen Kennzeichnung (5, 6) darstellen,
- eine Einheit zur digitalen Verarbeitung (9), die angepasst ist, um ebene, polygonale Oberflächen ausgehend von den erfassten sphärischen Koordinaten von anvisierten Punkten, bezeichnet als Messpunkte, die die topologische Bestimmung der genannten ebenen, polygonalen Oberflächen erlauben, als Modell darstellen zu können,
**dadurch gekennzeichnet, dass** die Verarbeitungseinheit angepasst ist, um Folgendes zu können:
- die Erstellung und Speicherung eines geometrischen digitalen Modells jeder ebenen, polygonalen Oberfläche (13; 55) ausgehend von einer Serie von Messpunkten (19-38; 60-63), die die topologische und individuelle Bestimmung der genannten Oberfläche erlaubt und darüber hinaus für jede Kante der ebenen, polygonalen Oberfläche zwei Punkte umfasst, deren Projektionen auf die genannte Oberfläche gemäß einer vorbestimmten Richtung zu der genannten Kante gehören, in dem ein Segment oder eine gerade Linie für jede Kante der genannten Oberfläche ausgehend von den sphärischen Koordinaten generiert wird, die aus zwei Messpunkten der Serie erfasst werden,
- die Berechnung und Registrierung eines Wertes, der die Grundfläche jedes damit kreierten digitalen Modells darstellt.

20. Vorrichtung gemäß Anspruch 19, **dadurch gekennzeichnet, dass** die Verarbeitungseinheit (9) angepasst ist, um ein digitales Modell einer ebenen, polygonalen Oberfläche (55) ausgehend von sphärischen Koordinaten zu schaffen, die aus einer Serie von Messpunkten (60-63), bezeichnet als vollständige Serie, erfasst werden, die ganz allein die Topologie der ebenen, polygonalen Oberfläche bestimmt.

21. Vorrichtung gemäß Anspruch 20, **dadurch gekennzeichnet, dass** die Verarbeitungseinheit (9) angepasst ist, um ein digitales Modell einer ebenen, polygonalen Oberfläche (55) ausgehend von einer Serie von Messpunkten zu schaffen, die für jeden höchsten Punkt der polygonalen Oberfläche einen Punkt (60-63) umfasst, dessen Projektion auf die Oberfläche gemäß einer vorbestimmten Richtung mit dem genannten höchsten Punkt zusammenfällt.

22. Vorrichtung gemäß Anspruch 21, die dazu bestimmt ist, die Oberfläche von Flächen zu messen, die ein Gebäudeteil begrenzen, **dadurch gekennzeichnet, dass** die Verarbeitungseinheit (9) angepasst ist, um ein digitales Modell einer horizontalen, ebenen, polygonalen Oberfläche, wie z. B. einen Boden oder eine horizontale Decke, ausgehend von einer Serie von Messpunkten zu schaffen, die für jeden höchsten Punkt der polygonalen Oberfläche einen Punkt umfassen, dessen vertikale Projektion auf der genannten horizontalen Oberfläche mit dem genannten höchsten Punkt zusammenfällt.

23. Vorrichtung gemäß Anspruch 20, **dadurch gekennzeichnet, dass** die Verarbeitungseinheit (9) angepasst ist, um ein digitales Modell einer ebenen, polygonalen Oberfläche (14; 54) ausgehend von einer Serie von Messpunkten zu schaffen, die für jede Kante der polygonalen Oberfläche zwei Punkte (45, 46, ..., 65, 66, 68-73) umfassen, deren Projektionen auf die Oberfläche gemäß einer vorbestimmten Richtung zu der genannten Kante gehören und unterschiedlich sind.

24. Vorrichtung gemäß Anspruch 23, die dazu bestimmt ist, zur Messung der Oberfläche der Fläche verwendet zu werden, die ein Gebäudeteil begrenzt, **dadurch gekennzeichnet, dass** die Verarbeitungseinheit (9) angepasst ist, um ein digitales Modell einer horizontalen, ebenen, polygonalen Oberfläche (14), wie z. B. einen Boden oder eine horizontale Decke, ausgehend von einer Serie von Messpunkten zu schaffen, die für jede Kante (47) der polygonalen Oberfläche zwei Punkte (45, 46) umfassen, deren vertikale Projektionen (48, 49) auf der genannten horizontalen Oberfläche zu der genannten Kante gehören und unterschiedlich sind.

25. Vorrichtung gemäß Anspruch 19 bis 24, **dadurch gekennzeichnet, dass** die Verarbeitungseinheit (9) angepasst ist, um:
- es dem Nutzer zu erlauben, über eine graphische Nutzerschnittstelle (12a, 12b) Daten, bezeichnet als Vorgabedaten, einzugeben, die die Definition der geometrischen, einem digitalen Modell zuzuweisenden Vorgaben erlauben, darunter die Daten, die das Generieren der geometrischen Objekte in dem digitalen Modell erlauben, und die Daten, die das Generieren der geometrischen Verhältnisse zwischen den geometrischen Objekten des digitalen Modells erlauben,
- die Vorgabedaten zu verwalten, die derart eingegeben sind, dass ein digitales Modell einer ebenen, polygonalen Oberfläche (13) unter Generieren der Segmente und / oder geraden Linien ausgehend von sphärischen Koordinaten geschaffen wird, die aus einer Serie von Messpunkten (19-38), bezeichnet als reduzierte Serie, und Vorgabedaten erfasst werden, die aus einer Serie von geometrischen Vorgaben eingegeben werden, wobei die genannten Serien von Messpunkten und Vorgaben in Kombination die Bestimmung der Topologie der ebenen, polygonalen Oberfläche erlauben.

26. Vorrichtung gemäß Anspruch 25, **dadurch gekennzeichnet, dass** die Verarbeitungseinheit (9) angepasst ist, um dem Nutzer die Eingabe der Vorgabedaten zu erlauben, die geometrische Objekte generieren, welche aus einem Punkt, einem Segment, einem Polygon ausgewählt sind.

27. Vorrichtung gemäß Anspruch 25 oder 26, **dadurch gekennzeichnet, dass** die Verarbeitungseinheit (9) angepasst ist, um dem Nutzer die Eingabe der Vorgabedaten zu erlauben, die die geometrischen Verhältnisse generieren, die aus einem Winkel zwischen zwei Segmenten des digitalen Modells, einer Ausrichtung eines Segments, einer Länge eines Segments, einer Verbindung zwischen zwei Segmenten, einer Parallelität von zwei Segmenten gewählt sind.

28. Vorrichtung gemäß Anspruch 25 bis 27, **dadurch gekennzeichnet, dass** die Verarbeitungseinheit (9) angepasst ist, um:
- es dem Nutzer zu erlauben, Vorgabedaten einzugeben, die gekrümmte, geometrische Objekte, wie z. B. einen Bogen, generieren,
- ausgehend von derartigen Vorgabedaten ein digitales, ebenes, nicht polygonales Modell zu schaffen, das ein / mehrere geometrische(s), gekrümmte(s) Objekt(e) integriert,
- einen Wert zu berechnen, der die Grundfläche des damit geschaffenen digitalen Modells darstellt.

29. Vorrichtung gemäß Anspruch 25 bis 28, **dadurch gekennzeichnet, dass** die Verarbeitungseinheit (9) angepasst ist, um nicht ausgerichtete Vorgaben gemäß einem variationsreichen Ansatz zu generieren.

30. Vorrichtung gemäß Anspruch 19 bis 29, **dadurch gekennzeichnet, dass** die Verarbeitungseinheit (9) angepasst ist, um digitale, geometrische, zweidimensionale Modelle zu schaffen.

31. Vorrichtung gemäß Anspruch 19 bis 30, **dadurch gekennzeichnet, dass** die Verarbeitungseinheit (9) angepasst ist, um digitale, geometrische, dreidimensionale Modelle zu schaffen.

32. Vorrichtung gemäß Anspruch 19 bis 31, **dadurch gekennzeichnet, dass** die Verarbeitungseinheit (9) angepasst, um ein Modell, bezeichnet als konsolidiertes Modell, zu schaffen, das eine Vielzahl von digitalen Modellen zusammenfasst, die jeweils einer ebenen, polygonalen Oberfläche entsprechen.

33. Vorrichtung gemäß Anspruch 19 bis 32, **dadurch gekennzeichnet, dass** die Verarbeitungseinheit (9) angepasst ist, um einen Wert, der die Länge jedes Segments eines geschaffenen digitalen Modells darstellt, und einen Wert zu berechnen und zu speichern, der die Länge des Umfangs des digitalen Modells darstellt.

34. Vorrichtung gemäß Anspruch 19 bis 33, **dadurch gekennzeichnet, dass** der Zusammenbau (15) Handhabungsmittel (7, 8) des Telemeters umfasst, die angepasst sind, um eine manuelle Orientierung desselben durch den Nutzer zu erlauben.

35. Vorrichtung gemäß Anspruch 19 bis 34, **dadurch gekennzeichnet, dass** die Auslösemittel ein manuelles Auslösemittel (82) mit sofortiger Wirkung umfassen.

36. Vorrichtung gemäß Anspruch 19 bis 35, **dadurch gekennzeichnet, dass** die Mittel zur winkelförmigen Kennzeichnung zwei winkelförmige Codierer (5, 6) umfassen.
